# EUROPEAN PATENT APPLICATION

(11) **EP 4 576 857 A1**
(43) Date of publication of application: **25.06.2025**
(21) Application number: 23873223.4
(22) Date of filing: 27.09.2023
(51) Int. Cl.: H04W 12/30, H04W 12/04, H04W 12/40, H04W 8/20

(54) **EUICC ENCRYPTION KEY MANAGEMENT METHOD AND DEVICE FOR PROFILE PROVISIONING IN WIRELESS COMMUNICATION SYSTEM**

(30) Priority: 27.09.2022 KR 20220122539
(71) Applicant: Samsung Electronics Co., Ltd., Suwon-si, Gyeonggi-do 16677 (KR)
(72) Inventor: KANG, Sujung, Suwon-si, Gyeonggi-do 16677 (KR); YOON, Kangjin, Suwon-si, Gyeonggi-do 16677 (KR); LEE, Duckey, Suwon-si, Gyeonggi-do 16677 (KR)
(74) Representative: Gulde & Partner
(86) International application number: PCT/KR2023/015057
(87) International publication number: WO 2024/072114

(57) **Abstract**

The disclosure relates to a 5G or 6G communication system for supporting a higher data transmission rate. The present disclosure discloses a method for provisioning a large number of profiles to terminals in a terminal manufacturing factory environment, wherein the method obtains key information and index information for profile installation, transmits a request for a profile for factory injection, including an index ID, to a profile server, receives a bound profile package (BPP) and profile installation key information including index information from the profile server, transmits the received BPP and profile installation key information to a terminal, and selects an encryption key with reference to the index ID in the eUICC of the terminal to decrypt the BPP.

## Description

### [Technical Field]

The disclosure relates to a method and device for provisioning a profile in a wireless communication system, and more particularly, to a method and device for provisioning a plurality of profiles to a terminal in a wireless communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies..

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure of Invention]

### [Technical Problem]

The disclosure provides a method and device for installing a large number of profiles in a factory environment of a manufacturer terminal in a wireless communication system based on the above discussion.

### [Solution to Problem]

In the disclosure for solving the above problems, a method performed by a factory in a wireless communication system includes acquiring, from a first server, encryption key information on a plurality of embedded universal integrated circuit cards (eUICCs), wherein the encryption key information includes a one-time public key of an eUICC and an index ID associated with a one-time private key matched to the one-time public key of the eUICC; storing encryption key information on the plurality of eUICCs; transmitting, to a profile server, encryption key information on the plurality of eUICCs; receiving, from the profile server, a plurality of bound profile packages (BPPs) based on encryption key information on the plurality of eUICCs; and transmitting, to a terminal, eUICC encryption key information and BPP matched to the eUICC of the terminal among the plurality of BPPs and encryption key information on the plurality of eUICCs, wherein the eUICC of the terminal is configured to verify the signature of the profile server and to decrypt the BPP to install a profile therein based on the BPP and the encryption key information on the eUICC.

In an embodiment, the method further includes receiving, from the terminal, an installation result of the profile; and transmitting, to the profile server, the profile installation result.

In an embodiment, the method further includes transmitting, to a second server, a number of profiles associated with an eUICC identifier (EID) and a list of the EIDs, wherein the second server is configured to order, to the profile server, a plurality of profiles based on the number of profiles associated with the eUICC identifier and the list of EIDs.

In an embodiment, the method further includes determining to load a profile on some or all of the plurality of eUICCs after storing encryption key information on the plurality of eUICCs, wherein decryption of the BPP is performed by creating a session key based on the one-time private key of the eUICC and the index ID.

Further, in another embodiment of the disclosure, a method performed by a terminal in a wireless communication system includes receiving, from a factory, encryption key information on an eUICC and a BPP matched to an eUICC of the terminal among a plurality of bound profile packages (BPPs) and encryption key information on a plurality of embedded universal integrated circuit cards (eUICCs); verifying a signature of the profile server based on the BPP and the encryption key information on the eUICC; decrypting the BPP in the case that verification of the profile server is completed; and installing the profile by decrypting the BPP, wherein the plurality of BPPs and encryption key information on the plurality of eUICCs are transmitted from a first server to the factory, the encryption key information includes a one-time public key of the eUICC and an index ID associated with a one-time private key matched to the one-time public key of the eUICC, and a plurality of BPPs are created based on the one-time public key of the eUICC.

Further, in another embodiment of the disclosure, a factory in a wireless communication system includes a transceiver capable of transmitting and receiving at least one signal; and a controller coupled to the transceiver, wherein the controller is configured to acquire, from a first server, encryption key information on a plurality of embedded universal integrated circuit cards (eUICCs), wherein the encryption key information includes a one-time public key of an eUICC and an index ID associated with a one-time private key matched to the one-time public key of the eUICC, to store encryption key information on the plurality of eUICCs, to transmit, to a profile server, encryption key information on the plurality of eUICCs, to receive, from the profile server, a plurality of bound profile packages (BPP) based on encryption key information on the plurality of eUICCs, and to transmit, to a terminal, eUICC encryption key information and BPP matched to the eUICC of the terminal among the plurality of BPPs and encryption key information on the plurality of eUICCs, wherein the eUICC of the terminal is configured to verify the signature of the profile server, and to decrypt the BPP to install a profile therein based on the BPP and the encryption key information on the eUICC.

Further, in another embodiment of the disclosure, a terminal in a wireless communication system includes a transceiver capable of transmitting and receiving at least one signal; and a controller coupled to the transceiver, wherein the controller is configured to receive, from a factory, encryption key information on an eUICC and BPP matched to the eUICC of the terminal among a plurality of bound profile packages (BPPs) and encryption key information on a plurality of embedded universal integrated circuit cards (eUICCs), to verify the signature of the profile server based on the BPP and the encryption key information on the eUICC, to decrypt the BPP in the case that verification of the profile server is completed, and to decrypt the BPP to install the profile, wherein the plurality of BPPs and encryption key information on the plurality of eUICCs is transmitted from a first server to the factory, the encryption key information includes a one-time public key of the eUICC and an index ID associated with a one-time private key matched to the one-time public key of the eUICC, and a plurality of BPPs are created based on the one-time public key of the eUICC.

### [Advantageous Effects of Invention]

The disclosure can provide a method and device capable of effectively installing profiles in a terminal manufacturer factory environment in a wireless communication system.

Effects that may be obtained from the disclosure are not limited to the effects described in various embodiments, and other effects not described will be clearly understood by those of ordinary skill in the art to which the disclosure belongs from the description below.

### [Brief Description of Drawings]

FIG. 1 is a block diagram illustrating relationships between components for provisioning a profile according to embodiments of the disclosure.
FIG. 2 is a message flow diagram illustrating a method in which an otPK index ID is used and in which a factory IT designates and uses a use order according to an embodiment of the disclosure.
FIG. 3 is a message flow diagram illustrating a method in which an otPK index ID is used and in which an eUICC designates and uses a use order according to an embodiment of the disclosure.
FIG. 4 is a message flow diagram illustrating another embodiment of the case that an otPK index ID is used and that an eUICC designates and uses a use order according to an embodiment of the disclosure.
FIG. 5 is a message flow diagram illustrating a method in which an EUM transmits one key material and in which an eUICC designates a key material to be used at the next time to reply to a factory IT according to an embodiment of the disclosure.
FIG. 6 is a message flow diagram illustrating an operation of using an otPK with the use number or indefinitely in an otPK reuse method according to an embodiment of the disclosure.
FIG. 7 is a block diagram illustrating a structure of a profile server, a factory IT, and a terminal in a wireless communication system according to an embodiment of the disclosure.

### [Mode for the Invention]

Hereinafter, an operating principle of the disclosure will be described in detail with reference to the accompanying drawings. In the following description, in describing the disclosure, in the case that it is determined that a detailed description of a related well-known function or constitution may unnecessarily obscure the gist of the disclosure, a detailed description thereof will be omitted. Terms described below are terms defined in consideration of functions in the disclosure, which may vary according to intentions or customs of users and operators. Therefore, the definition should be made based on the content throughout this specification.

Advantages and features of the disclosure, and a method of achieving them will become apparent with reference to the embodiments described below in detail in conjunction with the accompanying drawings. However, the disclosure is not limited to the embodiments disclosed below, but may be implemented in various different forms, and only embodiments of the disclosure enable the disclosure to be complete, and are provided to fully inform the scope of the disclosure to those of ordinary skill in the art to which the disclosure belongs, and the disclosure is only defined by the scope of the claims. Like reference numerals refer to like components throughout the specification.

Hereinafter, a base station is a subject performing resource allocation of a terminal, and may be at least one of a gNode B, an eNode B, a node B, a base station (BS), a radio access unit, a base station controller, or a node on a network. The terminal may include a user equipment (UE), a mobile station (MS), a cellular phone, a smart phone, a computer, or a multimedia system capable of performing a communication function. In the disclosure, a downlink (DL) is a wireless transmission path of a signal transmitted from a base station to a terminal, and an uplink (UL) is a wireless transmission path of a signal transmitted from a terminal to a base station. Hereinafter, although an LTE or LTE-A system may be described as an example, embodiments of the disclosure may be applied to other communication systems having a similar technical background or channel type. For example, 5G mobile communication technology (5G, new radio (NR)) developed after LTE-A may be included in s system to which embodiments of the disclosure may be applied, and the following 5G may be a concept including existing LTE, LTE-A and other similar services. Further, the disclosure may be applied to other communication systems through some modifications within a range that does not significantly deviate from the scope of the disclosure by determination of a person having skilled technical knowledge. In this case, it will be understood that each block of message flow diagrams and combinations of the message flow diagrams may be performed by computer program instructions.

Because these computer program instructions may be mounted in a processor of a general purpose computer, a special purpose computer, or other programmable data processing equipment, instructions performed by a processor of a computer or other programmable data processing equipment generate a means that performs functions described in the message flow diagram block(s). Because these computer program instructions may be stored in a computer usable or computer readable memory that may direct a computer or other programmable data processing equipment in order to implement a function in a particular manner, the instructions stored in the computer usable or computer readable memory may produce a production article containing instruction means for performing the function described in the message flow diagram block(s). Because the computer program instructions may be mounted on a computer or other programmable data processing equipment, a series of operation steps are performed on the computer or other programmable data processing equipment to generate a computer-executable process; thus, instructions for performing the computer or other programmable data processing equipment may provide steps for performing functions described in the message flow diagram block(s).

Further, each block may represent a portion of a module, a segment, or a code including one or more executable instructions for executing a specified logical function(s). Further, it should be noted that in some alternative implementations, functions recited in the blocks may occur out of order. For example, two blocks illustrated one after another may in fact be performed substantially simultaneously, or the blocks may be sometimes performed in the reverse order according to the corresponding function. In this case, a term '-unit' used in this embodiment means software or hardware components such as a field programmable gate array (FPGA) or an application specific integrated circuit (ASIC), and '-unit' performs certain roles. However, '-unit' is not limited to software or hardware. '-unit' may be constituted to reside in an addressable storage medium or may be constituted to reproduce one or more processors. Therefore, as an example, '-unit' includes components such as software components, object-oriented software components, class components, and task components, processes, functions, properties, procedures, subroutines, segments of program code, drivers, firmware, microcode, circuit, data, databases, data structures, tables, arrays, and variables. Functions provided in the components and '-units' may be combined into a smaller number of components and '-units' or may be further separated into additional components and '-units'. Further, components and '-units' may be implemented to reproduce one or more CPUs in a device or secure multimedia card. Further, in an embodiment, '-unit' may include one or more processors.

Hereinafter, for convenience of description, the disclosure uses terms and names defined in the 5GS and NR specifications, which are standards defined by the 3rd generation partnership project (3GPP) organization among the current existing communication standards. However, the disclosure is not limited by the above terms and names, and may be equally applied to wireless communication networks according to other specifications. For example, the disclosure may be applied to 3GPP 5GS/NR (5th generation mobile communication standard).

Hereinafter, for convenience of description, the disclosure uses terms and names defined in the RSP specifications (SGP.XX series), which are standards defined by the GSM association (GSMA) among the current existing eSIM standards. However, the disclosure is not limited by the terms and names, and may be equally applied to an eSIM according to other specifications. A universal integrated circuit card (UICC) is a smart card inserted and used in a terminal, for example, a mobile communication terminal, and is also referred to as a UICC card. The UICC may include an access control module for accessing a network of a mobile communication service provider. Examples of such access control modules include a universal subscriber identity module (USIM), a subscriber identity module (SIM), an Internet protocol multimedia service identity module (ISIM), and the like.

A UICC including a USIM is commonly referred to as a USIM card. Similarly, a UICC including a SIM module is commonly referred to as a SIM card. It should be noted that in the following description, the term SIM card may be used in the general sense including a UICC card, a USIM card, a UICC including an ISIM, and the like. Technology applied to a SIM card may be equally applied to a USIM card, an ISIM card, or a general UICC card.

The SIM card stores personal information of a mobile communication subscriber and performs subscriber authentication and traffic security key creation when accessing a mobile communication network to enable secure mobile communication use.

The SIM card is generally produced as a dedicated card for a specific mobile communication service provider by a request of the specific mobile communication service provider when the SIM card is produced, and authentication information for network access of the corresponding service provider, for example, a universal subscriber identity module (USIM) application and an international mobile subscriber identity (IMSI), a K value, an OPc value, and the like, is pre-loaded onto the card before release. Accordingly, the produced SIM card is transmitted to the corresponding mobile communication service provider and provided to the subscriber, and if necessary, management such as installation, modification, and deletion of applications in the UICC may also be performed using technologies such as over the air (OTA).

Subscribers may use the network and application services of the corresponding mobile communication service provider by inserting a UICC card into mobile communication terminal thereof. When replacing a mobile communication terminal, subscribers may use authentication information, mobile communication phone number, personal phone book, and the like stored in the UICC card as it is in the new mobile communication terminal by moving and inserting the UICC card from the existing mobile communication terminal to the new mobile communication terminal.

However, SIM cards are inconvenient for mobile terminal users to receive services from other mobile communication companies. Mobile communication terminal users have inconvenience that has to physically acquire SIM cards in order to receive services from the mobile communication provider. For example, when traveling to another country, there is inconvenience that has to acquire local SIM cards in order to receive local mobile communication services. Roaming services solve some of inconveniences, but there are also problems such as high fees and inability to receive services in the case that there is no contract between mobile communication companies.

In the case that a SIM module is downloaded remotely and installed on a UICC card, this inconvenience may be significantly solved. For example, a SIM module of a mobile communication service that a user wants to use may be downloaded onto a UICC card at a desired time point. This UICC card may also download and install multiple SIM modules and select and use only at least one SIM module among them. This UICC card may be fixed or not fixed to a terminal. A UICC that is fixed and used on a terminal is typically referred to as an eUICC, but in the disclosure, a UICC card that may remotely download and select a SIM module is collectively referred to as an eUICC. That is, among UICC cards that may remotely download and select a SIM module, a UICC card that is fixed to a terminal and a UICC card that is not fixed to a terminal are collectively referred to as eUICC. Further, the downloaded SIM module information is collectively referred to as a profile. Examples of profiles may be further categorized by use, such as a provisioning profile, which is a profile that has use restrictions only for connectivity for an initial configuration, an operational profile, which does not have such use restrictions, and a test profile that has use restrictions for testing.

In order to install a profile in an eUICC, it is generally assumed that a terminal user downloads a profile through a real-time network connection with a profile download server after release of a terminal. Currently, according to the remote profile provisioning specifications, which are eSIM standardization standards defined in the GSMA, for example, SGP.21/22, which is a remote SIM provisioning standard for consumer terminals, SGP.31/32, which is a remote SIM provisioning standard for IoT terminals, and SGP.01/02, which is a remote SIM provisioning standard for M2M terminals, the terminal performs a process of being connected to a profile download server in real-time through a network, exchanging messages between the terminal and the profile server multiple times, and performing common mutual authentication during this process to download a profile. However, a situation may not be assumed in which the network is always connected at the time point at which the terminal downloads a profile with the profile download server. Therefore, in order to resolve this, a provisioning profile, which is a limited-use profile that provides only connectivity for an initial configuration to the terminal, was introduced in SGP.21/22. Accordingly, terminal manufacturers may release eUICCs equipped with provisioning profiles. Further, it may be possible for manufacturers to pre-load an operational profile of a communication service provider, which does not have the above-described use restrictions, into the eUICC before releasing it, based on a contract with the service provider.

Further, there may be cases where it is necessary to support to release by changing and re-injecting an installed profile for reasons such as a change in business order or a refurbished terminal after initial installation of a business profile in an eSIM terminal in the factory. A current SGP.XX creates and uses only one one-time encryption key (otPK.EUICC.KA) of an eUICC using for profile installation, and because the eUICC is discarded after the profile is installed, it is not possible to support to release after re-injecting or additionally injecting the profile into the eUICC of the terminal in the factory; thus, the disclosure aims to solve this problem.

A new work item for provisioning profiles in terminals in the factory has recently been approved by the GSM association (GSMA, a telecommunications operator association), and discussions on standardization of devices and methods for provisioning profiles in terminals in the factory will be held as SGP.41 (technical requirements specification) and SGP.42 (technical specification (planned)).

In the disclosure, a function for provisioning a profile in a factory is referred to as an in factory profile provisioning (IFPP) function, and in the case of entering a state supporting the corresponding function, it may be indicated as entering an IFPP mode or an IFPP state. Alternatively, "f" may be additionally added to the end of the name of each entity to indicate that it is operating in the corresponding mode. For example, specific entities such as a terminal, an LPA, an eUICC, a profile server, a factory IT, a service provider (SP) server, and an eUICC manufacturer (EUM) server may be entities that further support the IFPP mode, or may be entities that support only the corresponding function. For example, SM-DP+, which is one of the profile servers, may be a server that supports the consumer-oriented remote SIM provisioning function defined in SGP.21/22, but that additionally supports some of the IFPP functions defined in SGP.41/42. Alternatively, SM-DP+, which is a profile server, may be a profile server that supports only the IFPP function. A profile server operating in an IFPP state may be indicated interchangeably in the disclosure as in a profile server f, for example.

In the disclosure, a universal integrated circuit card (UICC) is a smart card that is inserted into a mobile communication terminal and used, and may mean a chip that stores personal information such as network access authentication information, phone book, and SMS of a mobile communication subscriber and that performs subscriber authentication and traffic security key creation when accessing a mobile communication system such as GSM, WCDMA, LTE, and 5G, thereby enabling safe use of mobile communication. According to the type of mobile communication network to which the subscriber accesses, a UICC may be loaded with communication applications such as a subscriber identification module (SIM), a universal SIM (USIM), and an IP multimedia SIM (ISIM), and also provide a higher level security function for loading various application programs such as an electronic wallet, ticketing, and an electronic passport.

In the disclosure, an embedded UICC (eUICC) is not limited to a security module built into a terminal, and includes a removable security module that may be inserted into and removed from the terminal. The eUICC may be downloaded and installed from a server that stores a profile using over the air (OTA) technology. The eUICC may be referred to as an UICC that may download and install profiles.

A method of downloading and installing a profile in the eUICC using OTA technology in the disclosure may be applied to a removable UICC that may be inserted into and removed from a terminal, as described above. For example, the embodiment of the disclosure may be applied to a removable UICC that may download and install a profile using OTA technology. In the disclosure, the eUICC unique identification number (eUICC ID) may be referred to as an EID. The UICC referred to in the disclosure may be used interchangeably with an SIM, and the term eUICC may be used interchangeably with an eSIM.

In the disclosure, a profile may mean an application, a file system, an authentication key value, and the like stored in a UICC, packaged in a software form. Further, a profile may be referred to as access information. Further, a USIM profile in the disclosure may mean information having the same meaning as a profile or included in a USIM application in the profile packaged in a software form. In the disclosure, a profile package or an encrypted bound profile package (BPP) may be used interchangeably with a profile or as a term indicating a data object of a specific profile, and may be referred to as a profile TLV or a profile package TLV. A profile identifier may be referred to as an integrated circuit card identifier (ICCID) indicating a unique identification number of a profile. In the case that a profile package is encrypted using an encryption parameter, it may be referred to as a protected profile package (PPP) or a protected profile package TLV (PPP TLV). In the case that a profile package is encrypted using encryption parameters that may be decrypted only by a specific eUICC, it may be referred to as a bound profile package (BPP) or bound profile package TLV (BPP TLV). A profile package TLV may be a data set representing information that constitutes a profile in a tag, length, and value (TLV) format.

In the disclosure, a profile server is a server that may provide a function of creating a profile, encrypting a created profile, creating a profile remote management instruction, or encrypting a created profile remote management instruction or that may include a function of providing an IFPP mode, or supporting multiple profile activation of a terminal, and may be expressed as subscription manager data preparation (SM-DP), subscription manager data preparation plus (SM-DP+), or subscription manager secure routing (SM-SR).

The term 'terminal' or 'device' used in the disclosure may be referred to as a mobile station (MS), a user equipment (UE), a mobile equipment (ME), a user terminal (UT), a wireless terminal, an access terminal (AT), a terminal, a subscriber unit, a subscriber station (SS), a wireless device, a wireless communication device, a wireless transmit/receive unit (WTRU), a mobile node, a mobile, or other terms. Various embodiments of the terminal may include a cellular phone, a smart phone having a wireless communication function, a personal digital assistant (PDA) having a wireless communication function, a wireless modem, a portable computer having a wireless communication function, a photographing device such as a digital camera having a wireless communication function, a gaming device having a wireless communication function, music storage and playback appliances having a wireless communication function, Internet home appliances capable of performing wireless Internet access and browsing, as well as portable units or terminals incorporating combinations of such functions. Further, the terminal may include a machine to machine (M2M) terminal and a machine type communication (MTC) terminal/device, and an IoT terminal/device according to supporting performance characteristics. In the disclosure, the terminal may be referred to as an electronic device or simply a device. A terminal 120 that provides a function of installing a profile to an eUICC may be referred to as an eSIM terminal.

In the disclosure, the EUM is an eUICC manufacturer and means a manufacturer that produces eUICCs and provides personalized eUICCs, and information transmitted by the EUM may be transmitted online or offline through channels between an EUM server or a separate component. According to an embodiment of the disclosure, the EUM may mean an EUM server or a role performed by the EUM.

In the disclosure, the UE or device may include software or an application installed in the UE or device so as to control the UICC or eUICC. The software or application may be, for example, an application such as local profile assistant (LPA), SIM manager, or IoT profile assistant (IPA). The software or functions may be provided in an integrated manner. For example, the LPA and IPA may be provided as a single integrated app. In the disclosure, the software or application installed in the UE or device so as to control the UICC or eUICC may be collectively referred to as an LPA.

In the disclosure, an application protocol data unit (APDU) may be a message format or message in which a controller in a UE or device exchanges with an eUICC. The APDU is a pair of command and response, and an APDU command and an APDU response are defined in ETSI 102.221 with reference to ISO 7816. As defined in ETSI 102.221, an APDU command has a structure of class of instruction (CLA), instruction (INS), instruction parameter 1 (P1), instruction parameter 2 (P2) as a header of the APDU, and Lc (number of bytes in the command data field), data, Le (number of bytes expected in response of the command) as a body, and an APDU response has a structure of an optional data field, a status byte 1 (SW1), a status byte 2 (SW2), and a detailed description thereof refers to the ETSI 102.221 specification. Application messages transmitted from the LPA or the UE may be transmitted to the eUICC in the form of APDU, and information transmitted in this case may be included in data of the APDU and transmitted.

In the disclosure, the AKA may represent authentication and key agreement, and represent an authentication algorithm for accessing 3GPP and 3GPP2 networks. K is an encryption key value stored in an eUICC using for AKA authentication algorithm, and OPc in the disclosure is a parameter value that may be stored in an eUICC using for AKA authentication algorithm.

In the disclosure, the NAA is a network access application applied program, which may be an applied program such as an USIM or ISIM stored in a UICC and for accessing a network. The NAA may be a network access module.

In the disclosure, an end user, user, subscriber, and service subscriber may be used interchangeably as a user of the corresponding UE.

In the disclosure, a factory IT is a device responsible for the role of provisioning specific data or configuration to a UE in a manufacturing process and may refer to a module including a function of downloading a profile to a UE, and further include a function of acquiring and storing profiles from a profile server. The factory IT may be used interchangeably with factory IT equipment, a factory IT server, factory provisioning equipment, and a factory server, and even if it is expressed as a server hereinafter, the factory IT in the disclosure may be composed of one or more modules, for example, a server that stores data and a UE that plays a role in injecting configuration or data into an eSIM UE.

In the disclosure, OEM may be used interchangeably with a UE manufacturer and a manufacturer.

In the disclosure, the service provider (SP) may be used interchangeably as a communication service provider, MNO, mobile network provider, business operator, communication company, and SP server, and according to the embodiment, the service provider may mean a server of the service provider or a role performed by the service provider.

In the disclosure, a server vendor means a vendor that operates a profile server, and may mean a role performed by a profile server vendor.

In the disclosure, an encryption key is used for encompassing all encryption and decryption keys. For example, the encryption key may include a private key used for encrypting data or a public key used for decrypting data, and the public key may be shared in the form of a certificate. The disclosure provides a method and device for enabling to insert a profile into a UE including an eUICC and release.

In particular, the disclosure provides a method and device that supports to change, re-inject, and then release an installed profile due to a change in a business order, and the like after initial installation of a business profile in an eSIM UE in a factory. The meaning of "one-time" in a one-time encryption key is generally used in the industry to mean that it is used only when one profile is successfully installed. Currently, with reference to the SGP.XX series, because only one one-time encryption key (otPK/otSK.EUICC.KA) of an eUICC using for profile installation is created and used and should be discarded when installation is successful, it is impossible to support to change, re-inject, and release the installed profile.

Further, the disclosure provides a method and device capable of quickly downloading and installing profiles in a large number of UEs by overcoming the difficulty of performing a process of exchanging messages in multiple round trips, including a procedure of real-time network connection and mutual authentication between a profile server and individual UEs because rapid profile injection into a large number of UEs is required due to characteristics of a factory environment. Further, a method in which a factory IT equipment provisions a profile(s) in a UE without considering real-time connection between a profile server and the UE may be required, and in particular, a method of transmitting, verifying, and installing a profile encryption key in consideration of "non-real time" between a profile server (e.g., SM-DP+) and an eUICC may be required. Further, a method of considering an environment that provisions profiles in large quantities in the factory is required, and in particular, a method and device capable of transmitting information of a large number of profile(s) between entities in a process of ordering and preparing profiles for this may be required.

According to various embodiments of the disclosure, a UE manufacturer may pre-install and release a large number of profiles in an eSIM UE without real-time connection with a profile server. Further, the UE manufacturer may support to change, re-inject, and release installed profiles due to returns, changes in business orders, and the like, thereby efficiently managing inventory.

Further, according to various embodiments of the disclosure, because a user may directly access to a network by purchasing a UE in which a profile is already installed, the user may solve inconvenience of having to go to a Wi-Fi or mobile communication network in order to download a profile, thereby increasing user convenience.

Further, according to various embodiments of the disclosure, a communication operator may provide a UE to a user with a provisioning profile for downloading the operator's profile or an operational profile installed for immediate use of the operator's network service, thereby improving the user's convenience in using an eSIM.

The following embodiments describe the procedures for injecting and releasing profiles in the factory, and it should be noted that, at a specific time point after the profiles are injected and released in the factory, a UE user may also provision and install the profiles in a general user environment outside the factory according to the procedures defined in SGP.21/22. That is, the following embodiments describe provisioning in a factory installation environment, and it is to be made clear that this does not mean that profile installation in a general environment after factory release is impossible.

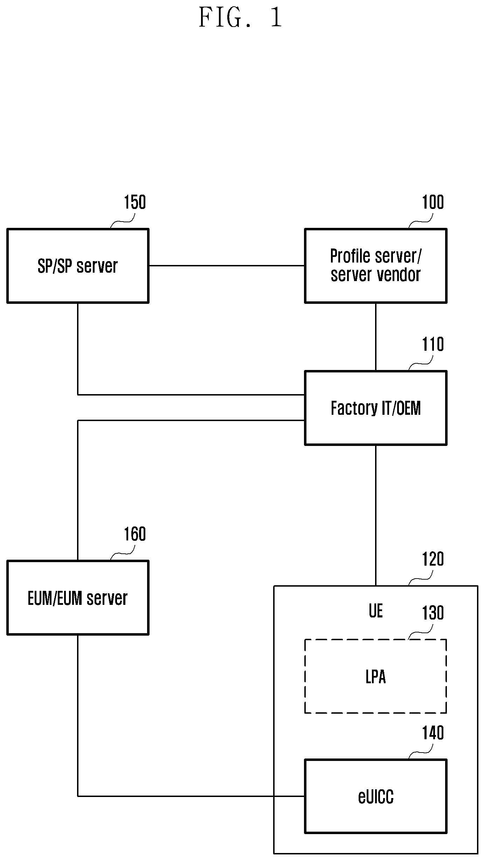

FIG. 1 is a block diagram illustrating relationships between components for provisioning a profile according to embodiments of the disclosure.

With reference to FIG. 1, a profile server/server vendor (hereinafter, may be referred to as a profile server or server vendor) 100 may represent at least one of servers including a function of creating a profile, storing a created profile, encrypting a created profile, creating a remote profile management (RPM) instruction, and encrypting a created profile remote management instruction, supporting a function of transmitting a created profile to an eSIM UE or another profile storage server, or supporting a function of creating a profile for IFPP, storing a profile created for IFPP, or encrypting a profile created for IFPP. The RPM may collectively refer to a series of procedures in which profile installation, activation, deactivation, deletion, and other functions are performed by an instruction transmitted from the profile server 100 to a UE 120. The RPM may be requested by a communication provider, a service provider, or an owner of the UE, and an instruction may be created by the profile server 100. The profile server/server vendor 100 may receive a profile order request from a service provider (SP)/SP server (hereinafter, may be referred to as an SP or SP server) 150 and determine whether the request is a request for profile creation for IFPP, or may combine profile order information received from a factory IT server/OEM (hereinafter, may be referred to as a factory IT, factory server, or OEM) 110 or the SP/SP server 150 with ordered EID information to map the profile and EID, thereby preparing them in the profile server 100. The SP/SP server 150 receives a profile order request from a factory IT server/OEM 110, determines whether the request is a request for provision order of profiles for IFPP, and inputs an order to the profile server/server vendor 100, thereby enabling the profile server 100 to provide one or more bound profile package (BPP) to the factory IT/OEM 110.

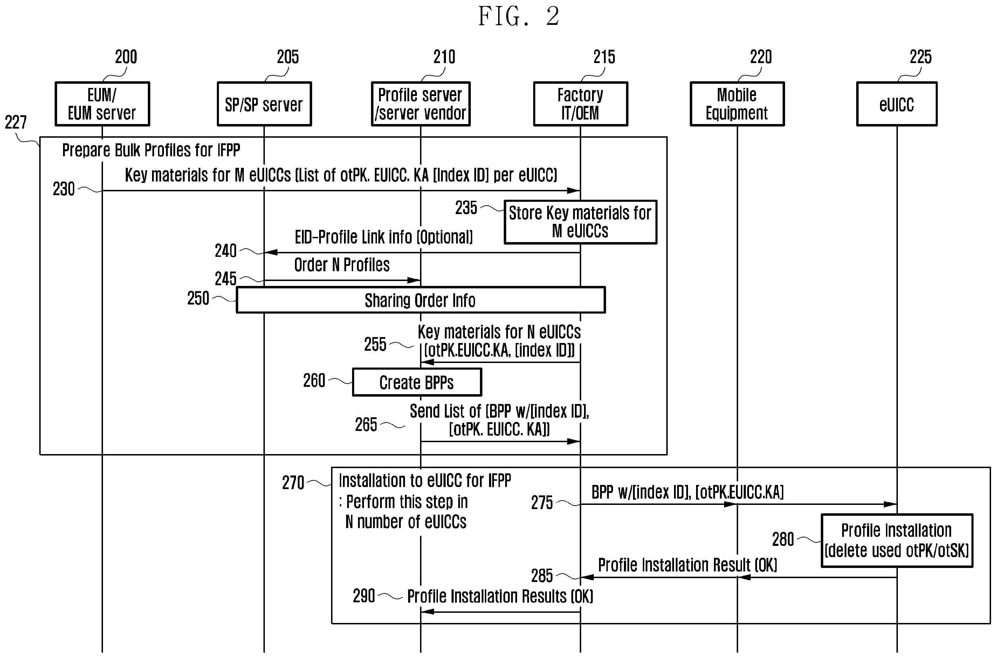

The UE 120 may include an eUICC 140 and a communication modem (not illustrated). The communication modem may be equipped with one or more baseband processors (hereinafter, referred to as a baseband) for wireless communication. The UE 120 may provide a function of receiving a BPP(s) created for IFPP from the factory IT/OEM 110 and installing the BPP(s) into the eUICC 140. The UE 120 may transmit the BPP to the eUICC 140, and may transmit the BPP to the eUICC 140 through an LPA 130 operating with the LPAf, or may transmit the BPP to the eUICC 140 without through the LPA 130. The corresponding messages being transmitted may be transmitted together with the BPP or may be transmitted with additional parameters added to the BPP, which will be described in detail in (step 275), (step 375), (step 475), (step 575), or (step 675) described with reference to FIGS. 2 to 6 below.

An example of a method of transmitting a message on encryption key information and installation of a BPP transmitted to the eUICC 140 using the LPA 130 operating with the LPAf may be a method in which the BPP is included and transmitted in one or more messages starting with ES10x. Alternatively, in the case of transmitting a message without through the LPA, the message may be transmitted as data of APDU such as STORE DATA.

Although one profile server 100 is expressed, there may be a plurality of profile servers 100, and accordingly, the factory IT 110 may receive and store BPPs from a plurality of profile servers 100.

As described above, the LPA 130 may support an IFPP function with eUICC control software or application. The LPA 130 may be implemented into a logical function of the UE 120 or the eUICC 140. The LPA 130 operating with the LPAf may receive a profile and additional authentication information for authenticating the profile server 100 from the factory IT 110 and provide them to the eUICC 140, and perform the role of acquiring a profile installation result from the eUICC 140 and transmitting it to the factory IT 110.

The eUICC 140 may determine whether the request is a request for profile installation in the factory through one or more messages of ES10x received from the LPA 130 operating with the LPAf or a profile installation message received through an application or software for a factory configuration of the factory IT 110 or the UE, and determine to enter an IFPP mode. In the case that the eUICC 140 does not support an IFPP function, the eUICC 140 may return an error and terminate IFPP processing.

The eUICC 140 may acquire the profile and information for authentication of the profile server 100 from the UE 120, perform decryption of the profile using the corresponding information, process the installation, and reply the installation result to the component transmitted the corresponding request, i.e., a specific application of the UE or to the LPA 130 operating with the LPAf of the UE. Further, the eUICC 140 may verify the profile server 100 that encrypts the profile, or perform authentication of the profile server 100 that transmits the message through signature verification of the signed component in the received message. The eUICC 140 may include an embedded UICC controlling authority security domain (ECASD), which is a space for storing credentials required in security domains thereof, for example, a certificate issuer's root public key for verifying an SM-DP+ certificate, which is the profile server 100, and a key set of the eUICC manufacturer, and an eSIM operating platform. Further, some of functions of the LPA may be implemented.

The factory IT/OEM 110 is a device responsible for the role of provisioning profiles to the UE in a factory and may be composed of one or more servers or UEs such as PCs. The factory IT/OEM 110 may be a server that acquires predetermined information on corresponding eUICCs 140 including a one-time encryption key from an EUM/EUM server (hereinafter, may be referred to as an EUM or EUM server) 160 or that transmits all or part of the acquired information to the profile server/server vendor 100 or that transmits an EID to order and information for mapping a profile to the SP/SP server 150 or that stores received encryption key information and BPP. The factory IT server/OEM 110 may perform at least an operation of requesting a BPP(S) for injection in the factory to the profile server/server vendor 100, or, as a result of the request, acquiring a BPP for installation in the eUICC 140 and data signed by the profile server 100 from the profile server/server vendor 100, storing the received BPPs and the signed data in the factory IT server 110, selecting a BPP mapped to an EID of a target UE to install the profile among the received or stored BPPs, or transmitting the BPP to the mapped UE during a factory configuration process. Some of information exchanged between the factory IT server 110 and the profile server 100, the SP server 150, and the EUM 160 may be shared between entities (i.e., UE manufacturer, profile server operating vendor, service provider, and eUICC manufacturer) performing the corresponding roles in another on or off line channel form (e.g., email transmission, and the like) rather than message transmission reception through an interface between servers.

Because the factory IT/OEM 110 may perform an operation performed by a UE manufacturer or a factory IT of a UE manufacturer, as described above, the factory IT/OEM 110 is expressed as a single entity in the drawings below, but it should be noted that the factory IT/OEM 110 may be composed of multiple devices (e.g., servers or UEs such as PCs). Accordingly, for example, it should be noted that a device in the factory IT/OEM 110 that requests BPPs to the profile server/server vendor 100 or provides an interface for acquiring BPPs, and a device of the factory IT/OEM 110 at a contact point for injecting a profile from the factory IT/OEM 110 into the UE 120 or acquiring the injected installation result may be the same device or different devices.

The eUICC manufacturer (EUM) 160 is a eUICC manufacturer and may inject key information for credentials for eUICC authentication into the eUICC 140 to provide personalized eUICCs 140 to the UE manufacturer, or the EUM/EUM server 160 may provide predetermined information on the corresponding eUICCs 140 including a one-time encryption key to the OEM/Factory IT server 110. Further, although not illustrated in the disclosure, predetermined information on the corresponding eUICCs 140 including a one-time encryption key may be transmitted from the EUM/EUM server 160 to the profile server/server vendor 100 according to the request of the OEM 110.

The service provider (SP) 150 is a business operator that provides network services using profiles, as described above, and the SP/SP server 150 may order a profile(s) for an IFPP function to the profile server/server vendor 100 and enable the profile server 100 to create and prepare the ordered profiles.

Hereinafter, the description of the above-described constitution modules may be applied to roles and relationships of modules indicated in the drawings to be described later. Further, among the above-described constitution modules, order information as information exchanged between the profile server/server vendor 100, the factory IT server/OEM 110, the EUM/EUM server 160, and the SP/SP server 150 may be transmitted in other forms such as interface linkage between servers of each entity or email.

FIG. 2 is a message flow diagram illustrating a method in which an otPK index ID is used and in which a factory IT designates and uses a use order according to an embodiment of the disclosure.

With reference to FIG. 2, before releasing a UE, a UE manufacturer may pre-load a profile into an eUICC in the factory and release the UE, and in this case, the UE manufacturer may provision profiles in one or more UEs, particularly for a large number of UEs. This step may be divided into step (227) of preparing profiles and transmitting the profiles to a factory IT/OEM 215, and step (270) in which the factory IT installs the profiles in the N number of different eUICCs 225.

At step 227, profiles for IFPP may be prepared and transmitted to the factory IT/OEM. A UE manufacturer wishing to produce a UE equipped with an eUICC may order the M number of eUICCs through an EUM/EUM server 200, and the EUM 200 may provide (step 230) the factory IT/OEM 215 with predetermined information (key materials) including encryption key information on the M number of ordered eUICCs. As key material information provided by the EUM 200, the EUM 200 may include otPK.EUICC.KA for each eUICC, and the otPK.EUICC.KA may be transmitted with an eUICC-signed value. Further, as key material information provided by the EUM 200, the EUM 200 may further include an index ID as identification information for identifying otPK.EUICC.KA. The index ID may be transmitted with an eUICC-signed or unsigned value. In the case that the otPK.EUICC.KA or the index ID is transmitted with an eUICC signed value, the EUM may further include a public key of eUICC and transmit it to the factory IT/OEM 215, which may be included in the eUICC certificate and transmitted. In the case that the EUM 200 supports the N number of profile installations in the eUICC, the N number of otPK.EUICC.KAs and an index ID for distinguishing them may be transmitted to the factory IT/OEM 215.

The index ID is information mapped to otPK.EUICC.KA, and the eUICC 225 that has received the index ID may transmit the corresponding index ID as information for determining otSK.EUICC.KA to use for creating a session key. The index ID may be constituted as a value that may distinguish otPK.EUICC.KA, and this may be composed of, for example, a partial value or an entire value of otPK.EUICC.KA, a value created including a part or all of otPK.EUICC.KA, a hashed value of a value created including a part or all of otPK.EUICC.KA, a part of the hashed value, or a value created by being derived from otPK.EUICC.KA. Alternatively, the index ID may be a number that may specify otPK.EUICC.KA or a value created including a number that may specify otPK.EUICC.KA. The index ID may be defined in a data format such as integer, string, and binary. The description of the index ID may be applied equally even if it is not described in other drawings in the disclosure.

In the case that the EUM/EUM server 200 receives an order for profiles for IFPP, the EUM/EUM server 200 may provide the factory IT/OEM 215 with eUICC encryption key information required for BPP decryption for each eUICC. Upon receiving this, the factory IT/OEM 215 may store (step 235) encryption key information on the M number of ordered eUICCs in the factory IT server 215.

Thereafter, at a specific time point, the factory IT/OEM 215 may determine to load the profile onto some N number of eUICCs or all of the M number of eUICCs ordered from the EUM 200. This may be according to a pre-loading release request of the profile from a service provider (SP)/SP server 205.

The factory IT/OEM 215 may transmit (step 240) at least one information of the number of profile(s) or the list of EID(s) to the SP/SP server 205 so that the SP/SP server 205 may prepare profiles linked to the EID in advance as an additional optional procedure. The SP/SP server 205 may order (step 245) the profile to a profile server/server vendor 210. In the case that step 240 was performed in advance and an EID list is present or that the EID list was acquired at a previous specific time point, the SP/SP server 205 may include EID information when ordering the profile and request it to the profile server/server vendor 210. The SP/SP server 205, the profile server/server vendor 210, and the factory IT/OEM 215 may share (step 250) information that may specify the corresponding order with each other. Information that may specify the corresponding order may be shared as identification information in which the SP/SP server 205 or the profile server/server vendor 210 provides to the factory IT/OEM 215. For example, the identification information may be at least one of information such as a batch ID and an order ID, an ordered profile list or EID list, information on the start and end numbers of the profile list or EID list, a factory serial number, or information on a manufacturer identification number.

The factory IT/OEM 215 may request the BPP to the profile server/server vendor 210. When requesting the BPP, the factory IT/OEM 215 may transmit (step 255), to the profile server/server vendor 210, key information corresponding to eUICCs of corresponding target UEs, as many as N, which is the number of UEs in which the SP/SP server 205 is to load the profile, among key information of eUICCs acquired at step 230. This may be part or all of key information received previously at (step 230). In the case that the factory IT/OEM 215 receives multiple otPK.EUICC.KA for each eUICC from the EUM/EUM server 200, the factory IT/OEM 215 may select and transmit one of unused otPK.EUICCs. According to whether the index ID is included and received at previous (step 230), it may be transmitted (step 255) as follows.
- In the case that an index ID is received as signed data, data is transmitted including the index ID
- When data is received including an index ID but received as unsigned data, the data is transmitted with or without an index ID
- In the case that an index ID is not received, the factory IT/OEM 215 does not include an index ID

The profile server/server vendor 210 may combine collected information in at least one of steps of collecting received profile order information (step 245),

link information of the profile-EID (step 240), mutually shared order information (step 250), and encryption key information of target eUICCs to install the received profile (step 255) to create (step 260) an encrypted profile package, and then provide (step 265) the created profile packages and information on eUICC binding to the factory IT/OEM 215. When the profile server 210 receives the message of (step 255) and constitutes (step 260) a verification and reply message for BPP creation if there is an index ID, the profile server 210 may further perform the following operations.
- In the case that the index ID is received as eUICC signed data, verify the eUICC signature by including the index ID.
- When the index ID is received as eUICC signed or unsigned data, create a signature of the profile server by including the index ID.
- Create a signature of the profile server by including the index ID as a value of the transaction ID or as a new parameter.

The created encrypted profile packages and each BPP encryption key information may be transmitted (step 265) to the factory IT/OEM 215 in one or more messages, and some or all of data transmitted in the corresponding messages may be provided as signed data.

In the case that the index ID is included and transmitted in (step 255), the index ID may be included and transmitted in the signed data in (step 265). In the case that the index ID is included or not included and transmitted, otPK.EUICC.KA may be included and transmitted in the signed data in (step 265).

At step 270, an operation in which the factory IT 215 installs profiles for IFPP in the eUICC may be described. This step may be performed for the N number of eUICCs.

The factory IT/OEM 215 may inject a profile into the UE before releasing the UE from the factory. To this end, the factory IT/OEM 215 may acquire and store a series of encryption key information required for profile decryption from the BPP and the eUICC. The series of encryption key information may include a one-time public key of the EUICC (hereinafter, referred to as otPK.EUICC.KA). The series of encryption key information may further include an index ID mapped to otPK.EUICC.KA.

The factory IT 215 may transmit a series of encryption key information required for profile decryption in the BPP and the eUICC from the factory to individual UEs 220 through a wired/wireless network within the factory. The BPP and a series of encryption key information may be included in one or more messages and transmitted to the UE 220. In the case that otPK.eUICC.KA is included and transmitted, the otPK.eUICC.KA may be included in signed data from the profile server and received by the UE 220. For example, the otPK.eUICC.KA may be included in signed data and received as one of the following. It is not limited to the following examples.
- SK.DPauth.SIG: Private key of the profile server using authentication of the profile server in the profile server
- SK.DPpb. SIG: Private key used for profile binding of the profile server in the profile server
- SK.DPxx.SIG: Private key of the profile server in which xx is defined to mean IFFP use

As described above, SK.DPpb.SIG may be a private key of the profile server using for profile binding in the profile server or a private key of the profile server used by the profile server for IFPP use. In DPxx.SIG, xx indicating the use may be indicated as specific information indicating that xx indicates IFPPP use.

The UE 220 may provide a function of receiving a BPP(s) from the factory IT 215 and injecting the BPP(s) into the eUICC 225 in an IFPP mode. For example, the corresponding UE 220 may operate in a factory provisioning mode at the time point of receiving the BPP, or the UE 220 may recognize that it should enter the IFPP at the time point of receiving the BPP and initiate an operation. Alternatively, the UE 220 may enter the corresponding mode through an event input into the UE by a factory employee, a configuration value, or recognition of a specific virtual private network (VPN). Entry into the IFPP mode by the UI or configuration value may be provided by a UI restricted not to be displayed to the user in a general environment. The UE 220 may transmit the BPP to the eUICC 225, either through the LPAf (not illustrated) as described above, or without through the LPAf (not illustrated) (step 275). As an example of a message transmitted to the eUICC using the LPAf (not illustrated), the BPP may be included and transmitted in one or more messages of ES10x. That is, the LPAf may include and transmit the BPP in a function, for example, an ES10f.LoadBPP function for transmitting the BPP to the eUICC 225 or may include the BPP in a separate function, that is, a separate function for transmitting eUICC key information before calling LoadBPP and transmit otPK.EUICC.KA or/and an index ID. This may be, for example, a function such as ES10f.prepareLoading. This may be equally applied to the embodiments to be described later with reference to FIGS. 2 to 6. Hereinafter, embodiments thereof will be described later with reference to FIGS. 2 to 6.

Information that allows to recognize that a message received by the eUICC 225 from the UE 220 is an operation for IFPP may be received. The eUICC 225 may determine that a profile installation operation is performed for IFPP and enter through the message received from the UE 220.

This may be a new function defined for IFPP, an IFPP identifier parameter added to an ES10x message defined in existing SGP.21/22 or SGP.31/32, or identification information for factory release that is not included for (consumer-oriented, M2M-oriented, or IoT-oriented) profile provisioning in a general environment after release of a UE. For example, it may be one of values such as a factory serial number, batch ID, producer identification information. It is not limited thereto.

As described above, the UE 220 may receive data including otPK.EUICC.KA or an index ID from the profile server, and data including the corresponding otPK.EUICC.KA or index ID may be included and received in data signed by one of the following. It is not limited to the following examples.
- SK.DPauth.SIG: Private key of the profile server used for authenticating the profile server by the profile server
- SK.DPpb.SIG: Private key of the profile server using for profile binding by the profile server
- SP.DPifpp.SIG: Private key of the profile server specifically using for IFPP by the profile server

The UE 220 may transmit the signed data back to the eUICC 225 with or without through the LPAf. The eUICC 225 verifies the signature of the profile server 210 on the data received thereby, and as described below, the eUICC 225 may create a session key using an one-time private key (otSK.EUICC.KA) corresponding to the otPK.EUICC.KA or/and index ID of the eUICC stored in advance to decrypt the BPP and process the installation (step 280). As described above, (step 275) to (step 280) may be performed as a sequential operation of receiving one or more messages and replying the respective processing results therefor, for example, at step 275, the LPAf (not illustrated) may transmit some data required for profile installation as one or more ES10x messages to the eUICC 225 with ES10f.prepareLoading, and LPAf (not illustrated) receives the installation result therefor from the eUICC 225, and then transmits a BPP to the eUICC 225 through a function such as ES 10f.LoadBPP, and the eUICC 225 that has received the BPP processes the received message by combining previously received information, and then creates a response message and replies to the LPAf (not illustrated). In this case, the otPK.EUICC.KA or/and the index ID for creating a session key may be first received by the eUICC separately from otPK.DP.KA (ES 10f.prepareLoading in the example above), and the eUICC 225 may identify and store whether there is/are otPK.EUICC.KA or/and otSK.EUICC.KA mapped to an index ID, and then process session key creation by combining the identified and stored otSK.EUICC.KA and otPK.DP.KA at the time point of creating a session key including the received otPK.DP.KA. In this way, in the case that information for profile installation is transmitted with one or more messages, an identifier for identifying whether the information is information for the same profile installation may be included in the transmitted messages. This may be, for example, a transaction ID. This may be equally applied to FIGS. 2 to 6 to be described later.

In the procedure of verifying the signature of the profile server 210 of (step 280), in the case that the index ID is received as signed data, the eUICC 225 verifies the signature by including the index ID. In the case that the index ID is received as unsigned data, the eUICC 225 should verify the signature without including the index ID when verifying the signature of the profile server.

In the procedure of creating a session key of (step 280), the eUICC 225 may perform the following procedure according to whether an index ID or otPK.EUICC.KA is received.
- When an index ID is received: Create a session key with otSK.EUCC.KA mapped to the index ID.
- When an index ID is not received but otPK.EUICC.KA is received: Create a session key with otSK.EUICC.KA mapped to otPK.EUICC.KA
- When an index ID is not received and otPK.EUICC.KA is not received: The eUICC sequentially selects one of unused otSK.EUICC.KAs and uses otSK.EUICC.KA or returns an error.

If profile installation is successful by decrypting the BPP of (step 280), the eUICC 225 discards the corresponding otPK/SK.EUICC.KA used for BPP installation. If profile installation fails, the eUICC 225 may maintain and store the otPK/SK.EUICC.KA for future use.

The eUICC 225 may transmit the profile installation result to the UE with or without through the LPAf, and the UE may reply to the factory IT server 215 (step 285). The eUICC 225 may transmit an installation result message replying to the factory IT 215, including installation result data signed by the eUICC to be identified by the profile server/server vendor 210 in addition to installation result data to be identified by the factory IT 215.

When the factory IT 215 receives a response that the profile installation result is successful, the factory IT 215 may delete the used key material or change the status of the corresponding key material to use completion. When the factory IT 215 receives an error as the profile installation result, the factory IT 215 may maintain and store the used key material and change (e.g., error, installation error, and the like) the status of the corresponding key material.

The factory IT 215 may reply the profile installation result back to the profile server/server vendor 210. The factory IT/OEM 215 may reply the installation results individually to the profile server/server vendor 210, or collect the results and provide them to the profile server/server vendor 210 in batches at a specific time point. In the case that the processing result is received as eUICC-signed installation result data, the profile server/server vendor 210 may verify the signature of the eUICC to identify the processing result. Upon receiving a success result as a processing result, the profile server/server vendor 210 may complete the use of otPK.EUICC.KA (+index ID) for the corresponding BPP installation to manage otPK.EUICC.KA by discarding otPK.EUICC.KA (+index ID) received in (step 255) and changing the status of otPK.EUICC.KA to use completion. The profile server/server vendor 210 or the factory IT/OEM 215 may optionally provide the corresponding installation result(s) to the SP/SP server 205.

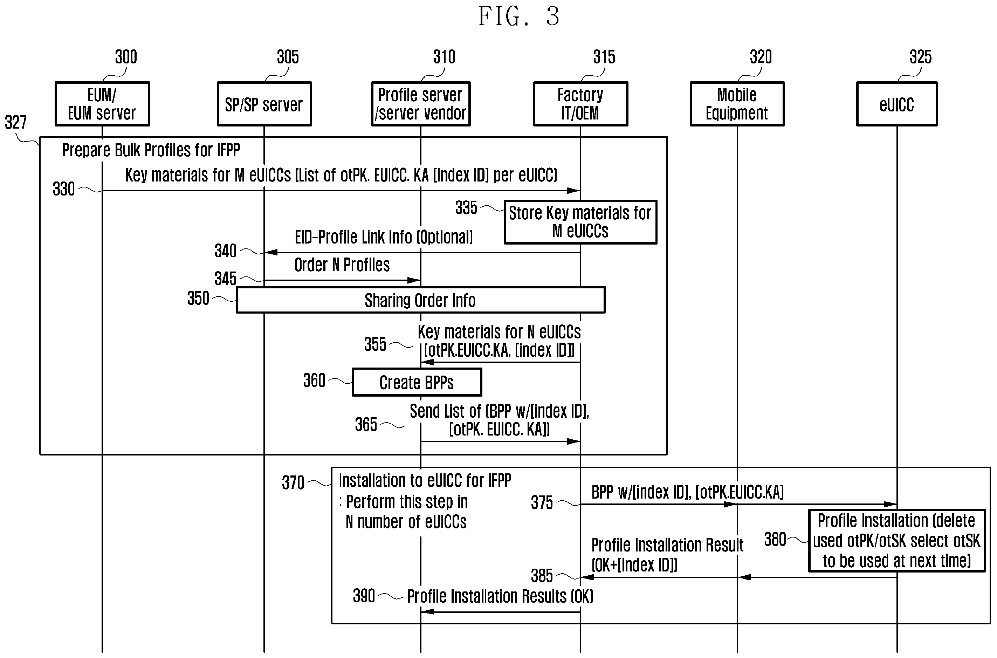

FIG. 3 is a message flow diagram illustrating a method in which an otPK index ID is used and in which an eUICC designates and uses a use order according to an embodiment of the disclosure.

FIG. 3 illustrates the case that an otPK index ID is used in the same method as that of FIG. 2, and in FIG. 2, the factory IT designates an index ID use order, but FIGS. 3 to 4 are different from FIG. 2 in the method in which the eUICC designates a use order using the otPK index ID.

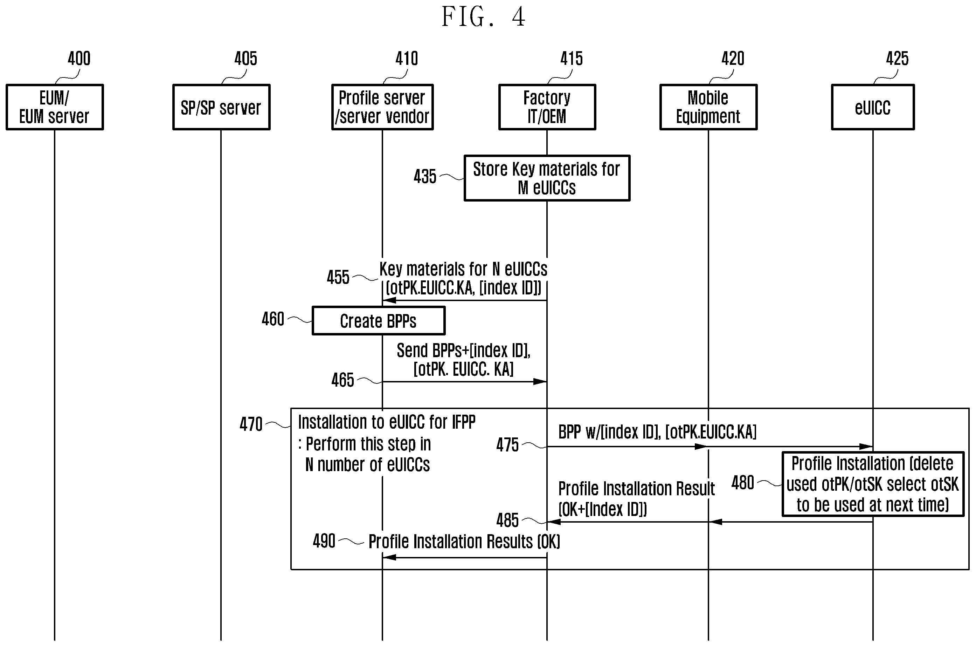

FIG. 3 illustrates an operation in which there is no profile in the eUICC and in which a profile is initially installed in the factory, and FIG. 4 illustrates an operation of processing installation in the case that the eUICC has transmitted an index ID at a time point before installing the profile in the eUICC. Procedures of FIGS. 3 and 4 may be processed as independent procedures, or a procedure of FIG. 4 may be processed in a connected operation at a specific time point after a procedure of FIG. 3 occurs.

In FIG. 3, the procedure described above is used, but because some operations are different, the corresponding operations are mainly described. In the case that it is explicitly described in FIG. 3, it should be noted that the interpretation may be made with reference to the procedure of FIG. 2.

At step 327 of FIG. 3, profiles for IFPP may be prepared and transmitted to the factory IT/OEM. A UE manufacturer wishing to produce a UE equipped with an eUICC may order the M number of eUICCs through an EUM/EUM server 300, and the EUM 300 may provide (step 330) a factory IT/OEM 315 with predetermined information (key materials) including encryption key information on the M number of ordered eUICCs. As key material information provided by the EUM 300, the EUM 300 may include otPK.EUICC.KA for each eUICC, and the otPK.EUICC.KA may be transmitted with a signed value of the eUICC. Further, as key material information provided by the EUM 300, the EUM 300 may further include an index ID as identification information for identifying otPK.EUICC.KA. The index ID may be transmitted with an eUICC signed or unsigned value. In the case that the otPK.EUICC.KA or the index ID is transmitted with an eUICC signed value, the EUM may further include a public key of the eUICC and transmit it to the factory IT/OEM 315, which may be included in the eUICC certificate and transmitted. Further, the EUM may explicitly further include and transmit an index ID indicator to be used initially. The index ID indicator to be used initially is information that may by identified by the factory IT and may be transmitted with an eUICC unsigned value.

In the case that the EUM 300 supports the N number of profile installations in the eUICC, the N number of otPK.EUICC.KAs for each eUICC and an index ID for distinguishing them may be transmitted to the factory IT/OEM 315. An index ID to be used for initial profile installation in the corresponding eUICC may be transmitted together.

The index ID is information mapped to otPK.EUICC.KA, and an eUICC 325 that has received the index ID may transmit the corresponding index ID as information for determining otSK.EUICC.KA to use for creating a session key. The index ID may be constituted as a value that may distinguish otPK.EUICC.KA, and this may be composed of, for example, a partial value or an entire value of otPK.EUICC.KA, a value created including a part or all of otPK.EUICC.KA, a hashed value of a value created including a part or all of otPK.EUICC.KA, a part of the hashed value, or a value created by being derived from otPK.EUICC.KA. Alternatively, the index ID may be a number that may specify otPK.EUICC.KA or a value created including a number that may specify otPK.EUICC.KA. The index ID may be defined in a data format such as integer, string, and binary. The description of the index ID may be applied equally even if it is not described in other drawings in the disclosure.

The factory IT/OEM 315 may store by additionally indicating in the case of an EID of the eUICC - otPK.EUICC.KA - index ID - index ID to be used initially.

Thereafter, at a specific time point, the factory IT/OEM 315 may determine to load the profile onto the N number of eUICCs, which are part of the M number of eUICCs ordered from the EUM 300 or onto all M number of eUICCs ordered from the EUM 300. This may be according to a pre-loading release request of the profile from a service provider (SP)/SP server 305.

The factory IT/OEM 315 may transmit (step 340) at least one information of the number of profile(s) or the list of EID(s) to the SP/SP server 305 so that the SP/SP server 305 may prepare profiles linked to the EID in advance as an additional optional procedure. The SP/SP server 305 may order (step 345) the profile to the profile server/server vendor 310. In the case that step 340 was performed in advance and an EID list is present or that the EID list was acquired at a previous specific time point, the SP/SP server 305 may include EID information when ordering the profile and request it to a profile server/server vendor 310. The SP/SP server 305, the profile server/server vendor 310, and the factory IT/OEM 315 may share (step 350) information that may specify the corresponding order with each other. Information that may specify the corresponding order may be shared as identification information in which the SP/SP server 305 or the profile server/server vendor 310 provides to the factory IT/OEM 315. For example, the identification information may be at least one of information such as a batch ID and an order ID, an ordered profile list or EID list, information on the start and end numbers of the profile list or EID list, a factory serial number, or information on a manufacturer identification number.

The factory IT/OEM 315 may request the BPP to the profile server/server vendor 310. When requesting the BPP, the factory IT/OEM 315 may transmit (step 355), to the profile server/server vendor 310, key information corresponding to eUICCs of corresponding target UEs, as many as N, which is the number of UEs in which the SP/SP server 305 is to load the profile, among key information of eUICCs acquired at step 330. This may be part or all of key information received previously at (step 330). In the case that the factory IT/OEM 315 receives multiple otPK.EUICC.KA for each eUICC from the EUM/EUM server 300, the factory IT/OEM 315 may identify an index ID to be used first and received from the EUM/EUM server 300 and select and transmit otPK.EUICC.KA corresponding to the index ID. According to whether the index ID is included at previous (step 350), it may be transmitted (step 355) as follows.
- In the case that the index ID is received as signed data, data is transmitted including the index ID
- When data is received including an index ID but received as unsigned data, the data is transmitted with or without an index ID
- In the case that an index ID is not received, the factory IT/OEM 315 does not include an index ID

The profile server/server vendor 310 may combine collected information in at least one of steps of collecting received profile order information (step 345), link information of the profile-EID (step 340), mutually shared order information (step 350), and encryption key information (step 355) of target eUICCs to install the received profile to create (step 360) an encrypted profile package, and then provide (step 365) the created profile packages and information on eUICC binding to the factory IT/OEM 315. When the profile server 310 receives the message of (step 355) and constitutes (step 360) a verification and reply message for BPP creation if there is an index ID, the profile server 310 may further perform the following operations.
- In the case that the index ID is received as eUICC signed data, verify the eUICC signature by including the index ID, and if signature verification fails, return an error, and if signature verification is successful,
   create a signature of the profile server by including the index ID.
- When the index ID is received as unsigned data, the index ID is not included in the eUICC signature verification. Create a signature of the profile server by including the index ID.
- The index ID may be defined and used as a value of a transaction ID or as a new parameter.

The created encrypted profile packages and mapped BPP encryption key information may be transmitted (step 365) to the factory IT/OEM 315 in one or more messages, and some or all of data transmitted in the corresponding messages may be provided as signed data of the profile server.

In the case that the index ID was included and transmitted in the previous step (step 355), the corresponding message being transmitted (step 365) may be replied by including the index ID in the signed data.

At step 370, an operation in which the factory IT 315 installs profiles for IFPP in the eUICC may be described. This step may be performed for the N number of eUICCs.

The factory IT/OEM 315 may inject a profile into the UE before releasing the UE from the factory. To this end, the factory IT/OEM 315 may acquire and store a series of encryption key information required for profile decryption from the BPP and the eUICC. The series of encryption key information may include a one-time public key of the EUICC (hereinafter, referred to as otPK.EUICC.KA). The series of encryption key information may further include an index ID mapped to otPK.EUICC.KA.

The factory IT 315 may transmit a series of encryption key information required for profile decryption in the BPP and the eUICC from the factory to individual UEs 320 through a wired/wireless network within the factory. The BPP and a series of encryption key information may be included in one or more messages and transmitted to the UE 320. In the case that otPK.eUICC.KA is included and transmitted, the otPK.eUICC.KA may be included in signed data from the profile server and received by the UE 320. In the case that the index ID is included and transmitted, the index ID may be included in signed data from the profile server and received by the UE 320. In the case that the otPK.EUICC.KA or index ID is received as signed data of the profile server, for example, the otPK.EUICC.KA or index ID may be included in signed data and received as one of the following. It is not limited to the following examples.
- SK.DPauth.SIG: Private key of the profile server using authentication of the profile server in the profile server
- SK.DPpb.SIG: Private key used for profile binding of the profile server in the profile server
- SK.DPxx.SIG: Private key of the profile server in which xx is defined to mean IFFP use

As described above, SK.DPpb.SIG may be a private key of the profile server using for profile binding in the profile server or a private key of the profile server used by the profile server for IFPP use. In DPxx.SIG, xx indicating the use may be indicated as specific information indicating that xx indicates IFPPP use.

The UE 320 may provide a function of receiving a BPP(s) from the factory IT 315 and injecting the BPP(s) into the eUICC 325 in an IFPP mode. For example, the corresponding UE 320 may operate in a factory provisioning mode at the time point of receiving the BPP, or the UE 320 may recognize that it should enter the IFPP at the time point of receiving the BPP and initiate an operation. Alternatively, the UE 320 may enter the corresponding mode through an event input into the UE by a factory employee, a configuration value, or recognition of a specific virtual private network (VPN). Entry into the IFPP mode by the UI or configuration value may be provided by a UI restricted not to be displayed to the user in a general environment. The UE 320 may transmit the BPP to the eUICC 325(step 375).

In this case, in the case that the factory IT does not transmit the index ID to the profile server at (step 355), the factory IT may further include an index ID mapped to the BPP to be installed in the corresponding UE and transmit it to the UE 320. This may be transmitted to the eUICC 325 through the LPAf (not illustrated) as described above, or may be transmitted to the eUICC 325 without through the LPAf (not illustrated) (step 375). As an example of a message transmitted to the eUICC using the LPAf (not illustrated), the BPP may be included and transmitted in one or more messages of ES10x.

Information that allows to recognize that a message received by the eUICC 325 from the UE 320 is an operation for IFPP may be received. The eUICC 325 may determine that a profile installation operation is performed for IFPP and enter through the message received from the UE 320.

This may be a new function defined for IFPP, an IFPP identifier parameter added to an ES10x message defined in existing SGP.31/33 or SGP.31/33, or identification information for factory release that is not included for (consumer-oriented, M3M-oriented, or IoT-oriented) profile provisioning in a general environment after release of a UE. For example, it may be one of values such as a factory serial number, batch ID, producer identification information. It is not limited thereto.

As described above, the UE 320 may receive data including otPK.EUICC.KA or an index ID from the profile server, and data including the corresponding otPK.EUICC.KA or index ID may be included and received in data signed by one of the following. It is not limited to the following examples.
- SK.DPauth.SIG: Private key of the profile server used for authenticating the profile server by the profile server
- SK.DPpb.SIG: Private key of the profile server using for profile binding by the profile server
- SP.DPifpp.SIG: Private key of the profile server specifically using for IFPP by the profile server

The UE 320 may transmit again the signed data to the eUICC 325 with or without through the LPAf. The eUICC 325 may verify the signature of the profile server 310 on the data received thereby, create a session key using a one-time private key (otSK.EUICC.KA) of the eUICC stored in advance to decrypt the BPP, and process the installation (step 380).

In the procedure of verifying the signature of the profile server 310 of (step 380), in the case that the index ID is received as signed data, the eUICC 325 verifies the signature by including the index ID. In the case that the index ID is received as unsigned data, the eUICC 325 should verify the signature without including the index ID when verifying the signature of the profile server.

In the procedure of creating a session key of (step 380), the eUICC 325 may perform the following procedure according to whether an index ID or otPK.EUICC.KA is received.
- If an index ID is received, the eUICC may additionally identify whether there is an initially configured use order in the eUICC before selecting the otSK.EUICC.KA mapped to the index ID.
   In the case that the use order is the same, the session key is created with the otSK.EUCC.KA mapped to the index ID, and if the use order is different or there is no index ID matched to the received index ID, an error may be returned.
- If an index ID is not received and otPK.EUICC.KA is received: Create a session key with otSK.EUICC.KA mapped to otPK.EUICC.KA
- If an index ID is not received and otPK.EUICC.KA is not received: The eUICC sequentially selects one of unused otSK.EUICC.KAs and uses otSK.EUICC.KA or returns an error.

If profile installation is successful by decrypting the BPP of (step 380), the eUICC 325 discards the corresponding otPK/SK.EUICC.KA used for BPP installation. If profile installation fails, the eUICC 325 may maintain and store the otPK/SK.EUICC.KA for future use.

The eUICC 325 may transmit the profile installation result to the UE with or without through the LPAf, and the UE may reply to the factory IT server 315 (step 375).

The eUICC 325 may transmit an installation result message replying to the factory IT 315, including installation result data signed by the eUICC to be identified by the profile server/server vendor 310 in addition to installation result data to be identified by the factory IT 315.

If profile installation is successful, the message being replied at (step 385) may provide the following use order by including the index ID.

When the factory IT 315 receives a response that the profile installation result is successful, the factory IT 315 may delete the used key material or change the status of the corresponding key material to use completion. When the factory IT 315 receives an error as the profile installation result, the factory IT 315 may maintain and store the used key material and change (e.g., error, installation error, and the like) the status of the corresponding key material. Further, the factory IT/OEM 315 may indicate and store the BPP mapped to the corresponding index ID in the following order when an index ID is included and received.

The factory IT 315 may reply again the profile installation result to the profile server/server vendor 310. The factory IT/OEM 315 may reply the installation results individually to the profile server/server vendor 310, or collect the results and provide them to the profile server/server vendor 310 in batches at a specific time point. In the case that the processing result is received as eUICC-signed installation result data, the profile server/server vendor 310 may verify the signature of the eUICC to identify the processing result. Upon receiving a success result as a processing result, the profile server/server vendor 310 may complete the use of otPK.EUICC.KA (+index ID) for the corresponding BPP installation to manage otPK.EUICC.KA by discarding otPK.EUICC.KA (+index ID) received in (step 355) and changing the status of otPK.EUICC.KA to use completion. The profile server/server vendor 310 or the factory IT/OEM 315 may optionally provide the corresponding installation result(s) to the SP/SP server 305.

FIG. 4 is a message flow diagram illustrating another embodiment of the case that an otPK index ID is used and that an eUICC designates and uses the use order according to an embodiment of the disclosure.

Procedures of FIGS. 3 and 4 may be processed as independent procedures, or a procedure of FIG. 4 may be processed as a connected operation at a specific time point after the procedure of FIG. 3 occurs.

A factory IT/OEM 415 may store key materials- [Index ID] - use order including EID - otPK.EUICC.KA of the eUICC. The use order may be information, for example, an index ID to be used in the following order, received from an eUICC 425 as a result of BPP installation by the factory IT/OEM 415 at a specific time point before performing the procedure of FIG. 4.

Thereafter, at a specific time point, the factory IT/OEM 415 may request the BPP to a profile server/server vendor 410 (step 455). The factory IT/OEM 415 may transmit (step 455) key information to eUICCs of the corresponding target UEs to the profile server/server vendor 410 as many as N, which is the number of UEs on which an SP/SP server 405 will load the profile among key information of eUICCs acquired at a previous specific time point of (step 435). This may be part or all of the key information received in previous (step 430). In the case that the factory IT/OEM 415 receives multiple otPK.EUICC.KA for each eUICC from an EUM/EUM server 400, the factory IT/OEM 415 may identify the index ID received from the eUICC during previous BPPP installation, select otPK.EUICC.KA mapped to the index ID, and transmit it to the profile server/server vendor 410. The factory IT may determine whether an index ID is included and transmit it (step 455). This may be processed in one of the following methods according to whether the index ID was received as signed data of the eUICC, as described above in (step 330) of FIG. 3.
- In the case that the index ID is received as eUICC signed data, data is transmitted including the index ID.
- Data is received including an index ID, but when the data is received as eUICC unsigned data, the data is transmitted with or without the index ID
- In the case that the index ID is not received, the factory IT/OEM 415 does not include an index ID.

As described in FIG. 3, the profile server/server vendor 410 may combine collected information in at least one step of steps of collecting received profile order information (step 345), link information of the profile-EID (step 340), mutually shared order information (step 350), and encryption key information of target eUICCs to install the received profile (step 355), create (step 460) an encrypted profile package, and then provide (step 465) the created profile packages and information on eUICC binding to the factory IT/OEM 415. When the profile server 410 receives the message of (step 455) and constitutes (step 460) a verification and reply message for BPP creation if there is an index ID, the profile server 410 may further perform the following operations when.
- In the case that the index ID is received as eUICC signed data, verify the eUICC signature by including the index ID, and if the signature verification fails, return an error, and if the signature verification is successful,
   create a profile server signature by including the index ID.
- When the index ID is received as unsigned data, the index ID is not included in eUICC signature verification. Create a signature of the profile server by including the index ID.
- The index ID may be defined and used as a value of a transaction ID or as a new parameter.

The created encrypted profile packages and mapped BPP encryption key information may be transmitted (step 465) to the factory IT/OEM 415 in one or more messages, and some or all of data transmitted in the corresponding messages may be provided as signed data of the profile server.

In the case that the index ID was included and transmitted in the previous step (step 455), the corresponding message being transmitted (step 465) may be replied by including the index ID in the signed data.

(Step 475) to (step 490) after step 470 may be understood with reference to descriptions corresponding to (step 375) to (step 390) described with reference to FIG. 3.

In the case that profile installation is successful and that the index ID used for profile installation is a last index ID, the eUICC may transmit a message without including the index ID in (step 385). In the case that a reply message received by the factory IT/OEM 415 is transmitted without the index ID, the factory IT/OEM 415 may additionally identify whether all index IDs mapped to the corresponding eUICC have been exhausted and complete the processing.

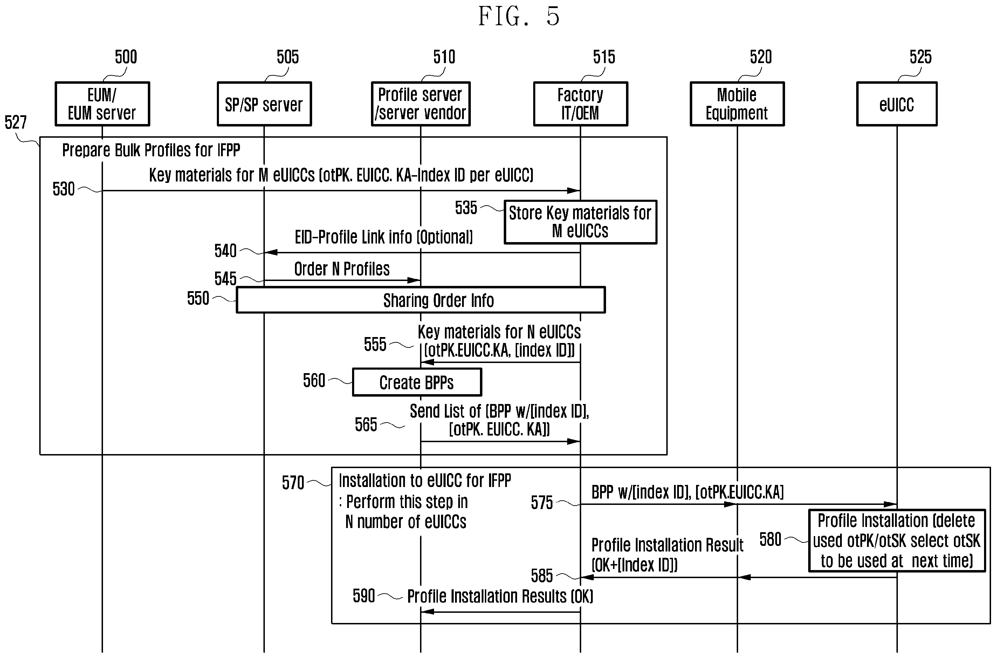

FIG. 5 is a message flow diagram illustrating a method in which an EUM transmits one key material and in which an eUICC designates a key material to be used at the next time and replies to a factory IT according to an embodiment of the disclosure.

In the above description, FIG. 5 mainly illustrated a procedure and operation in which the EUM creates otPK.EUICC.KA, which is a plurality of eUICC encryption keys and/or lists of corresponding index IDs, for each eUICC, stores the corresponding plurality of key information for each eUICC, and also transmits (step 550) and uses the corresponding lists to the factory IT/OEM 515. Compared to FIG. 2, FIG. 5 illustrates a procedure and operation in which the EUM initially transmits (step 550) and uses only one key material for each eUICC to a factory IT/OEM 515.

The key material may include at least otPK.EUICC.KA, which is an eUICC encryption key and include a corresponding index ID.

Before releasing a UE, a UE manufacturer may pre-load a profile onto an eUICC in a factory and release the UE, and in this case, the UE manufacturer may provision profiles in one or more UEs, particularly for a large number of UEs. This step may be divided into step (527) of preparing profiles and transmitting the profiles to the factory IT/OEM 515, and step (570) in which the factory IT installs the profiles in the N number of different eUICCs 525.

At step 527, profiles for IFPP may be prepared and transmitted to the factory IT/OEM. A UE manufacturer wishing to produce a UE equipped with an eUICC may order M number of eUICCs through an EUM/EUM server 500, and the EUM 500 may provide (step 550) the factory IT/OEM 515 with predetermined information (key material) including encryption key information on the M number of ordered eUICCs. As key material information provided by the EUM 500, the EUM 500 may include otPK.EUICC.KA for each eUICC, and otPK.EUICC.KA may be transmitted with an eUICC-signed value. Further, as key material information provided by the EUM 500, the EUM 500 may further include an index ID as identification information for identifying otPK.EUICC.KA. The index ID may be transmitted with an eUICC-signed or unsigned value. In the case that otPK.EUICC.KA or the index ID is transmitted with a EUM signed value, the EUM may further include a public key of the eUICC and transmit it to the factory IT/OEM 515, which may be included in the eUICC certificate and transmitted. In the case that the EUM 500 supports the N number of profile installations in the eUICC, the N number of otPK.EUICC.KAs and an index ID for distinguishing them may be transmitted to the factory IT/OEM 515. The index ID is information mapped to otPK.EUICC.KA, and an eUICC 525 that has received the index ID may transmit the corresponding index ID as information for determining otSK.EUICC.KA to use for creating a session key.

The index ID is information mapped to otPK.EUICC.KA, and the eUICC 525 that has received the index ID may transmit the corresponding index ID as information for determining otSK.EUICC.KA to use for creating a session key. The index ID may be constituted as a value that may distinguish otPK.EUICC.KA, and this may be composed of, for example, a partial value or an entire value of otPK.EUICC.KA, a value created including a part or all of otPK.EUICC.KA, a hashed value of a created value including a part or all of otPK.EUICC.KA, a part of a hashed value, or a value created by being derived from otPK.EUICC.KA. Alternatively, the index ID may be a number that may specify otPK.EUICC.KA or a value created including a number that may specify otPK.EUICC.KA. The index ID may be defined in a data format such as integer, string, and binary.

In the case that the EUM/EUM server 500 receives an order for profiles for IFPP, the EUM/EUM server 500 may provide the factory IT/OEM 515 with eUICC encryption key information required for BPP decryption for each eUICC. Upon receiving this, the factory IT/OEM 515 may store (step 555) encryption key information on the M number of ordered eUICCs in the factory IT server 515. Compared to FIG. 2, the factory IT/OEM 515 may further receive and manage one otPK.EUICC.KA for each eUICC and an optionally mapped index ID. The EUM/EUM server 500 may provide only one otPK.EUICC.KA-[Index ID] for each eUICC (step 550). This may correspond to both cases that the EUM/EUM server 500 creates multiple otPK.EUICC.KA-[Index ID] and injects multiple key information into the eUICC, or that the EUM/EUM server 500 creates one otPK.EUICC.KA-[Index ID] and injects one key information into the eUICC.

Thereafter, at a specific time point, the factory IT/OEM 515 may determine to load the profile onto some N number of eUICCs or all eUICCs of the M number of eUICCs ordered from the EUM 500. This may be according to a pre-loading release request of the profile from a service provider (SP)/SP server 505.

The factory IT/OEM 515 may transmit (step 540) at least one information of the number of profile(s) or the list of EID(s) to the SP/SP server 505 so that the SP/SP server 505 may prepare profiles linked to the EID in advance as an additional optional procedure. The SP/SP server 505 may order (step 545) the profile to a profile server/server vendor 510. In the case that step 540 was performed in advance and an EID list is present or that the EID list was acquired at a previous specific time point, the SP/SP server 505 may include EID information when ordering the profile and request it to the profile server/server vendor 510. The SP/SP server 505, the profile server/server vendor 510, and the factory IT/OEM 515 may share (step 550) information that may specify the corresponding order with each other. Information that may specify the corresponding order may be shared as identification information in which the SP/SP server 505 or the profile server/server vendor 510 provides to the factory IT/OEM 515. For example, the identification information may be at least one of information such as a batch ID and an order ID, an ordered profile list or EID list, information on the start and end numbers of the profile list or EID list, a factory serial number, or information on a manufacturer identification number.

The factory IT/OEM 515 may request a BPP to the profile server/server vendor 510. When requesting the BPP, the factory IT/OEM 515 may transmit (step 555), to the profile server/server vendor 510, key information corresponding to eUICCs of corresponding target UEs, as many as N, which is the number of UEs on which the SP/SP server 505 is to load a profile among key information of eUICCs acquired at step 550. This may be part or all of the key information received previously at (step 550). The factory IT/OEM 515 may transmit otPK.EUICC.KA received for each eUICC from the EUM/EUM server 500 to the factory IT/OEM 515. According to whether the index ID is included and received at previous (step 550), it may be transmitted (step 555) as follows.
- In the case that the index ID is received as signed data, data is transmitted including the index ID
- When data is received including an index ID but received as unsigned data, the data is transmitted with or without an index ID
- In the case that an index ID is not received, the factory IT/OEM 515 does not include an index ID

The profile server/server vendor 510 may combine collected information in at least one of steps of collecting received profile order information (step 545), link information of the profile-EID (step 540), mutually shared order information (step 550), and encryption key information of target eUICCs to install the received profile (step 555) to create (step 560) an encrypted profile package, and then provide (step 565) the created profile packages and information on eUICC binding to the factory IT/OEM 515. When the profile server 510 receives the message of (step 555) and constitutes (step 560) a verification and reply message for BPP creation if there is an index ID, the profile server 510 may further perform the following operations.
- In the case that the index ID is received as eUICC signed data, verify an eUICC signature by including the index ID.
- When the index ID is received as eUICC signed or unsigned data, create a signature of the profile server by including the index ID.
- Create a signature of the profile server by including the index ID as a value of the transaction ID or as a new parameter.

The created encrypted profile packages and each BPP encryption key information may be transmitted (step 565) to the factory IT/OEM 515 in one or more messages, and some or all of data transmitted in the corresponding messages may be provided as signed data.

The BPP may be received at (step 565), and in the case that the index ID was received previously, the corresponding message being transmitted (step 565) may be transmitted including the index ID in the signed data. In the case that the message is transmitted with or without the index ID, otPK.EUICC.KA may be included in signed data and transmitted at (step 565).

At step 570, an operation in which the factory IT 515 installs profiles for IFPP in the eUICC may be described. This step may be performed for the N number of eUICCs.

The factory IT/OEM 515 may inject a profile into the UE before releasing the UE from the factory. To this end, the factory IT/OEM 515 may acquire and store a series of encryption key information required for profile decryption from the BPP and the eUICC. The series of encryption key information may include a one-time public key of the EUICC (hereinafter, referred to as otPK.EUICC.KA). The series of encryption key information may further include an index ID mapped to otPK.EUICC.KA.

The factory IT 515 may transmit a series of encryption key information required for profile decryption in the BPP and the eUICC from the factory to individual UEs 520 through a wired/wireless network within the factory. The BPP and a series of encryption key information may be included in one or more messages and transmitted to the UE 520. In the case that otPK.eUICC.KA or an index ID is included and transmitted, the otPK.eUICC.KA or the index ID may be included in signed data from the profile server and received by the UE 520. For example, the otPK.eUICC.KA or the index ID may be included in signed data and received as one of the following. It is not limited to the following examples.
- SK.DPauth.SIG: Private key of the profile server using authentication of the profile server in the profile server
- SK.DPpb. SIG: Private key used for profile binding of the profile server in the profile server
- SK.DPxx.SIG: Private key of the profile server in which xx is defined to mean IFFP use

As described above, SK.DPpb.SIG may be a private key of the profile server using for profile binding in the profile server or a private key of the profile server used by the profile server for IFPP use. In DPxx.SIG, xx indicating the use may be indicated as specific information indicating that xx indicates IFPPP use.

The UE 520 may provide a function of receiving a BPP(s) from the factory IT 515 and injecting the BPP(s) into the eUICC 525 in an IFPP mode. For example, the corresponding UE 520 may operate in a factory provisioning mode at the time point of receiving the BPP, or the UE 520 may recognize that it should enter the IFPP at the time point of receiving the BPP and initiate an operation. Alternatively, the UE 520 may enter the corresponding mode through an event input into the UE by a factory employee, a configuration value, or recognition of a specific virtual private network (VPN). Entry into the IFPP mode by the UI or configuration value may be provided by a UI restricted not to be displayed to the user in a general environment. The UE 520 may transmit the BPP to the eUICC 525, either through the LPAf (not illustrated) as described above or without through the LPAf (not illustrated) (step 575).

An example of a message transmitted to the eUICC using the LPAf (not illustrated) may be included and transmitted in one or more messages of ES10x. Hereinafter, an embodiment of this will be described later with reference to FIGS. 4 to 6.

Information that allows to recognize that a message received by the eUICC 525 from the UE 520 is an operation for IFPP may be received. The eUICC 525 may determine that a profile installation operation is performed for IFPP and enter through the message received from the UE 520.

This may be a new function defined for IFPP, an IFPP identifier parameter added to an ES10x message defined in existing SGP.51/52 or SGP.51/52, or identification information for factory release that is not included for (consumer-oriented, M2M-oriented, or IoT-oriented) profile provisioning in a general environment after release of a UE. For example, it may be one of values such as a factory serial number, batch ID, producer identification information. It is not limited thereto.

As described above, the UE 520 may receive data including otPK.EUICC.KA or an index ID from the profile server, and data including the corresponding otPK.EUICC.KA or index ID may be included and received in data signed by one of the following. It is not limited to the following examples.
- SK.DPauth.SIG: Private key of the profile server used for authenticating the profile server by the profile server
- SK.DPpb.SIG: Private key of the profile server using for profile binding by the profile server
- SP.DPifpp.SIG: Private key of the profile server specifically using for IFPP by the profile server

The UE 520 may transmit again the signed data to the eUICC 525 with or without through the LPAf. The eUICC 525 may verify the signature of the profile server 510 on the data received thereby, create a session key using a one-time private key (otSK.EUICC.KA) of the eUICC stored in advance to decrypt the BPP, and process the installation (step 580).

In the procedure of verifying the signature of the profile server 510 of (step 580), in the case that the index ID is received as signed data, the eUICC 525 verifies the signature by including the index ID. In the case that the index ID is received as unsigned data, the eUICC 525 should verify the signature without including the index ID when verifying the signature of the profile server.

In the procedure of creating a session key of (step 580), the eUICC 525 may perform the following procedure according to whether an index ID or otPK.EUICC.KA is received.
- When an index ID is received: Create a session key with otSK.EUCC.KA mapped to the index ID.
- When an index ID is not received and otPK.EUICC.KA is received: Create a session key with otSK.EUICC.KA mapped to otPK.EUICC.KA
- When an index ID is not received and otPK.EUICC.KA is not received: The eUICC selects one of unused otSK.EUICC.KAs (e.g., according to sequence) and uses otSK.EUICC.KA or returns an error.

If the BPP of (step 580) is decrypted and profile installation is successful, the eUICC 525 discards the corresponding otPK/SK.EUICC.KA used for BPP installation. Further, the eUICC 525 may additionally perform one of the following operations 1 and 2 when profile installation is successful.
1. Create otPK/otSK.EUICC.KA and optionally a corresponding index ID, and store otPK.EUICC.KA or an index ID mapped to otSK.EUICC.KA. Sign data including otPK.EUICC.KA with a private key of the eUICC and transmit a key material. An index ID (when created) may or may not be included in signed data.
2. Select one unused otSK.EUICC.KA and transmit data including the corresponding otPK.EUICC.KA with a key material signed with the private key of the eUICC. The index ID (when stored) is transmitted with or without being included in signed data.

If profile installation fails, the eUICC 525 may maintain and store otPK/SK.EUICC.KA for future use.

The eUICC 525 may transmit the installation result of the profile to the UE with or without through the LPAf, and the UE may reply to the factory IT server 515 (step 585). The eUICC 525 may transmit an installation result message replying to the factory IT 515, including installation result data signed by the eUICC to be identified by the profile server/server vendor 510 in addition to installation result data to be identified by the factory IT 515.

An example of data being transmitted may have a constitution of the following format.

Profile Installation Result ([Signed(Key Material), key material], Result1, [Index ID], [Signed(Result2),Result2])
- Signed (Key Material) is key material data signed by the eUICC. It may be included and transmitted when profile installation is successful. otPK.EUICC.KA should be included as a key material that may be used for creating a BPP in the corresponding eUICC, and an index ID is optionally included.
- key material: It may be transmitted as a hashed value as a value to be used by the profile server for signature verification comparison.
- Result1: Installation result information to be identified by the factory IT, which may be encrypted and transmitted with an encryption key that may be interpreted by the factory IT.
- Index ID: In the case that there is an index ID but that signed data1 is not created including the index ID, it may be optionally included to be identified by the factory IT. It may be encrypted and transmitted with an encryption key that may be interpreted by the factory IT.
- Signed(Result2): Installation result to be transmitted to the profile server and signed by the eUICC.
- Result2: It may be transmitted with a hashed value as a value to be used for comparing signature verification of SignedResult2 by the profile server.

If the factory IT 515 receives a response that the profile installation result is successful, the factory IT 515 may delete the used key material or change the status of the corresponding key material to use completion. The factory IT 515 may store the signed (key material) and key material as information to be used to the next for a BPP installation request to the profile server. If the factory IT 515 receives an error as the profile installation result, the factory IT 515 may maintain and store the used key material and change (e.g., error, installation error, and the like) the status of the corresponding key material.

The factory IT 515 may reply again the profile installation result to the profile server/server vendor 510. In this case, with reference to the example above, the factory IT 515 may transmit the profile installation result excluding signed (key material), key material, and index ID. The factory IT/OEM 515 may reply the installation results individually to the profile server/server vendor 510, or may collect the results and provide them to the profile server/server vendor 510 in batches at a specific time point. In the case that the processing result is received as eUICC-signed installation result data, that is, if it is received as signed (result2) with reference to the example above, the profile server/server vendor 510 may verify the signature of the eUICC to identify the processing result. Upon receiving a success result as a processing result, the profile server/server vendor 510 may complete the use of otPK.EUICC.KA (+index ID) for the corresponding BPP installation to manage otPK.EUICC.KA by discarding otPK.EUICC.KA (+index ID) received in (step 555) and changing the status of otPK.EUICC.KA to use completion. The profile server/server vendor 510 or the factory IT/OEM 515 may optionally provide the corresponding installation result(s) to the SP/SP server 505.

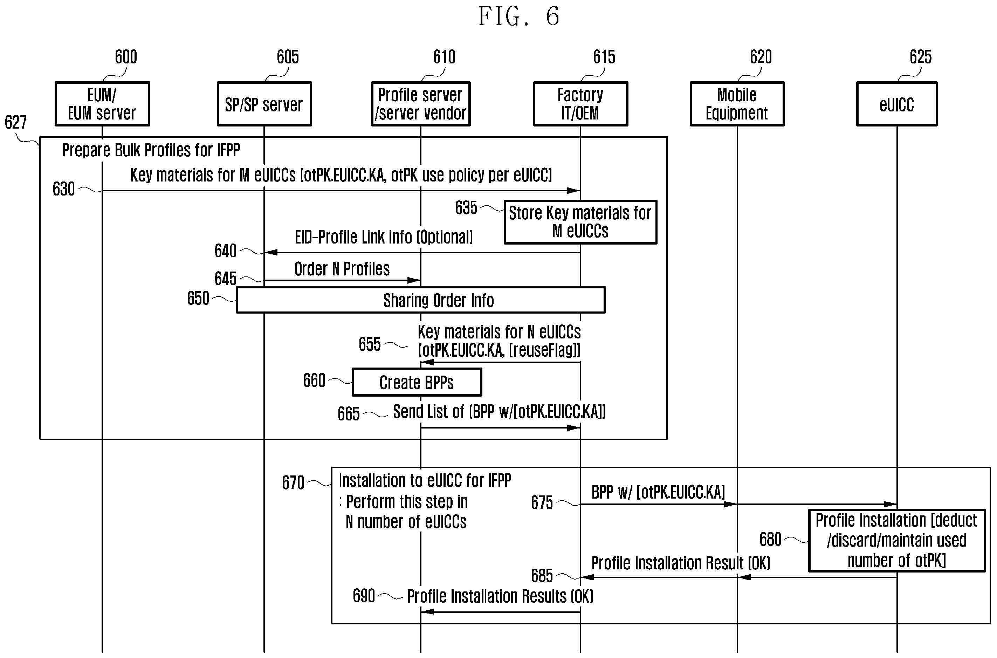

FIG. 6 is a message flow diagram illustrating an operation of using an otPK with the used number or indefinitely in an otPK reuse method according to an embodiment of the disclosure.

FIGS. 2 and 3 illustrate a method of not reusing an eUICC encryption key, for example, a method of using an index ID, but FIG. 6 illustrates a method of processing profile provisioning by reusing an eUICC encryption key. With reference to FIG. 6, before releasing a UE, a UE manufacturer may pre-load a profile into an eUICC in the factory and release the UE, and in this case, the UE manufacturer may provision profiles in one or more UEs, particularly for a large number of UEs. This step may be divided into step (627) of preparing profiles and transmitting the profiles to a factory IT/OEM 615, and step (670) in which the factory IT installs the profiles in the N number of different eUICCs 625.

At step 627, profiles for IFPP may be prepared and transmitted to the factory IT/OEM. A UE manufacturer wishing to produce a UE equipped with an eUICC may order the M number of eUICCs through an EUM/EUM server 600, and the EUM 600 may provide (step 630) the factory IT/OEM 615 with predetermined information (key materials) including encryption key information on the M number of ordered eUICCs. As key material information provided by the EUM 600, the EUM 600 may include otPK.EUICC.KA for each eUICC, and the otPK.EUICC.KA may be transmitted with a EUM signed value. Further, as key material information provided by the EUM 600, the EUM 600 may further include a use policy (policy rule) for otPK.EUICC.KA. The policy rule may be transmitted with a EUM unsigned value. In the case that the otPK.EUICC.KA is transmitted with a EUM signed value, the EUM may further include a public key of the eUICC and be transmitted to the factory IT/OEM 615, which may be included in the eUICC certificate and transmitted. In the case that the EUM 600 supports the N number of profile installations in the eUICC, the N number of otPK.EUICC.KA may be transmitted to the factory IT/OEM 615, and a policy rule (otPK use policy) for otPK.EUICC.KA may be included and transmitted. The otPK use policy may include at least one of information such as whether reuse is possible, reuse method = number of times, unlimited, used number = allowed number. In the case of applying the otPK use policy, the EUM/EUM server 600 may configure the otPK use policy to the eUICC and provide the corresponding otPK use policy to the factory IT.

The factory IT/OEM 615 that has received (step 616) eUICC encryption key information required for BPP decryption for each eUICC from the EUM/EUM server 600 may map encryption key information on the M number of ordered eUICCs and the otPK use policy and store (step 635) them in the factory IT server 615.

Thereafter, at a specific time point, the factory IT/OEM 615 may determine to load the profile onto some N number of eUICCs or all of the M number of eUICCs ordered from the EUM 600. This may be according to a pre-loading release request of the profile from a service provider (SP)/SP server 605.

The factory IT/OEM 615 may transmit (step 660) at least one information of the number of profile(s) or the list of EID(s) to the SP/SP server 605 so that the SP/SP server 605 may prepare profiles linked to the EID in advance as an additional optional procedure. The SP/SP server 605 may order (step 665) the profile to a profile server/server vendor 610. In the case that step 660 was performed in advance and an EID list is present or that the EID list was acquired at a previous specific time point, the SP/SP server 605 may include EID information when ordering the profile and request it to the profile server/server vendor 610. The SP/SP server 605, the profile server/server vendor 610, and the factory IT/OEM 615 may share (step 650) information that may specify the corresponding order with each other. Information that may specify the corresponding order may be shared as identification information in which the SP/SP server 605 or the profile server/server vendor 610 provides to the factory IT/OEM 615. For example, the identification information may be at least one of information such as a batch ID and an order ID, an ordered profile list or EID list, information on the start and end numbers of the profile list or EID list, a factory serial number, or information on a manufacturer identification number.

The factory IT/OEM 615 may request the BPP to the profile server/server vendor 610. When requesting the BPP, the factory IT/OEM 615 may transmit (step 655), to the profile server/server vendor 610, key information corresponding to eUICCs of corresponding target UEs, as many as N, which is the number of UEs on which the SP/SP server 605 is to load profiles among key information of eUICCs acquired at step 630. This may be part or all of the key information received previously at (step 630). In the case that the factory IT/OEM 615 receives information on an otPK use policy from the EUM/EUM server 630, the factory IT/OEM 615 may indicate and transmit it in the case that otPK reuse is configured to be possible. This may be a value such as resuseFlag, for example.

In the case that the profile server 610 operates a policy of not supporting otPK reuse, the profile server may identify whether the otPK has been previously received and used, and return an error and terminate the procedure, when the same otPK is received. Alternatively, the profile server may not identify whether the otPK has been previously received and used but return an error and terminate the procedure by not supporting it when the reuseFlag is set and received regardless of this.

In at least one step of steps of collecting link information of profile-EID (step 660), mutually shared order information (step 650), and encryption key information (step 655) of target eUICCs to install the received profile, the profile server 610 may combine collected information, create (step 660) an encrypted profile package, and then provide (step 665) the created profile packages and information on eUICC binding to the factory IT/OEM 615.

The created encrypted profile packages and each BPP encryption key information may be transmitted (step 665) to the factory IT/OEM 615 in one or more messages, and some or all of data transmitted in the corresponding messages may be provided as signed data.

The corresponding message being transmitted (step 665) may be transmitted including otPK.EUICC.KA in the signed data.

At step 670, an operation in which the factory IT 615 installs profiles for IFPP in the eUICC may be described. This step may be performed for the N number of eUICCs.

The factory IT/OEM 615 may inject a profile into the UE before releasing the UE from the factory. To this end, the factory IT/OEM 615 may acquire and store a series of encryption key information required for profile decryption from the BPP and the eUICC. The series of encryption key information may include a one-time public key of the EUICC (hereinafter, referred to as otPK.EUICC.KA). The series of encryption key information may further include an index ID mapped to the otPK.EUICC.KA.

The factory IT 615 may transmit a series of encryption key information required for profile decryption in the BPP and the eUICC from the factory to individual UEs 620 through a wired/wireless network within the factory. The BPP and a series of encryption key information may be included in one or more messages and transmitted to the UE 620. In the case that otPK.eUICC.KA is included and transmitted, the otPK.eUICC.KA may be included in signed data from the profile server and received by the UE 620. For example, the otPK.eUICC.KA may be included in signed data by one of the following and received. It is not limited to the following examples.
- SK.DPauth.SIG: Private key of the profile server using authentication of the profile server in the profile server
- SK.DPpb.SIG: Private key using for profile binding of the profile server in the profile server
- SK.DPxx.SIG: Private key of the profile server in which xx is defined to mean IFFP use

As described above, SK.DPpb.SIG may be a private key of the profile server using for profile binding in the profile server or a private key of the profile server using by the profile server for IFPP use. In DPxx.SIG, xx indicating the use may be indicated as specific information indicating that xx indicates IFPPP use.

The UE 620 may provide a function of receiving a BPP(s) from the factory IT 615 and injecting the BPP(s) into the eUICC 625 in an IFPP mode. For example, the corresponding UE 620 may operate in a factory provisioning mode at the time point of receiving the BPP, or the UE 620 may recognize that it should enter the IFPP at the time point of receiving the BPP and initiate an operation. Alternatively, the UE 620 may enter the corresponding mode through an event input into the UE by a factory employee, a configuration value, or recognition of a specific virtual private network (VPN). Entry into the IFPP mode by the UI or configuration value may be provided by a UI restricted not to be displayed to the user in a general environment. The UE 620 may transmit the BPP to the eUICC 625, either through the LPAf (not illustrated) as described above or without through the LPAf (not illustrated) (step 675).

An example of a message transmitted to the eUICC using the LPAf (not illustrated) may be included and transmitted in one or more messages of ES10x. Hereinafter, an embodiment of this will be described with reference to FIG. 6 .

Information that allows to recognize that a message received by the eUICC 625 from the UE 620 is an operation for IFPP may be received. The eUICC 625 may determine that a profile installation operation is performed for IFPP and enter through the message received from the UE 620.

This may be a new function defined for IFPP, an IFPP identifier parameter added to an ES10x message defined in existing SGP.61/62 or SGP.31/32, or identification information for factory release that is not included for (consumer-oriented, M2M-oriented, or IoT-oriented) profile provisioning in a general environment after release of a UE. For example, the information may be one of values such as a factory serial number, batch ID, producer identification information. It is not limited thereto.

As described above, the UE 620 may receive data including otPK.EUICC.KA or an index ID from the profile server, and data including the corresponding otPK.EUICC.KA or index ID may be included and received in data signed by one of the following. It is not limited to the following examples.
- SK.DPauth.SIG: Private key of the profile server used for authenticating the profile server by the profile server
- SK.DPpb.SIG: Private key of the profile server using for profile binding by the profile server
- SP.DPifpp.SIG: Private key of the profile server specifically using for IFPP by the profile server

The UE 620 may transmit again the signed data to the eUICC 625 with or without through the LPAf. The eUICC 625 may verify the signature of the profile server 610 on the data received thereby, create a session key using a one-time private key (otSK.EUICC.KA) of the eUICC stored in advance to decrypt the BPP, and process the installation (step 680).

At (step 680), the eUICC 625 may identify the stored otPK reuse policy or the used number. If the reuse policy/number is used, the eUICC 625 may terminate the procedure by returning an error, when the used number is exceeded. In the case that the otPK reuse policy is allowed or/and the reused number is within the predetermined reused number, the eUICC 625 may create a session key using otSK.EUICC.KA mapped to otPK.EUICC.KA. The eUICC 625 may use mapped otSK.EUICC.KA when otPK.EUICC.KA is received (step 675). Because reuse is allowed, only one otSK.EUICC.KA may exist in the eUICC. In this case, because there is only one otSK.EUICC.KA when otPK.EUICC.KA is not received (step 675), the eUICC 625 may create a session key using the corresponding otSK.EUICC.KA. In the case that there are two or more otSK.EUICC.KA and that otPK.EUICC.KA is not received, the eUICC 625 may return an error.

After successful profile installation, the eUICC 625 may process with one of the following.
- otPK/SK non-reuse policy: Discard used otSK.EUICC.KA
- otPK/SK reuse policy: Store used otSK.EUICC.KA

In the case that otSK.EUICC.KA is reusable and that an otPK/SK used number policy is used,
- deduct and store the used number. When the used number is reached, discard used otSK.EUICC.KA.

If profile installation fails, the eUICC 625 may process with one of the following.
- otPK/SK non-reuse policy: Maintain existing otSK.EUICC.KA
- otPK/SK reuse policy: Store otSK.EUICC.KA (regardless of success/failure)

In the case that otSK.EUICC.KA is reusable and that an otPK/SK used number policy is used,
- If it fails, maintain the previous used number

At (step 680), in the case that the eUICC 625 stores together otSK.EUICC.KA and mapped otPK.EUICC.KA, if the eUICC 625 discards/stores/maintains the otSK.EUICC.KA, the eUICC 625 may equally discard/store/maintain mapped otPK.EUICC.KA.

The eUICC 625 may transmit the installation result of the profile to the UE with or without through the LPAf, and the UE may reply to the factory IT server 615 (step 685). The eUICC 625 may transmit an installation result message replying to the factory IT 615, including installation result data signed by the eUICC to be identified by the profile server/server vendor 610 in addition to installation result data to be identified by the factory IT 615.

When the factory IT 615 receives a response that the profile installation result is successful, the factory IT 615 may use a reuse policy and, in the case that there is a reused number, the factory IT 615 may store the used otPK number +1, and if the used number is reached, the factory IT 615 may delete the used key material or change the status of the corresponding key material to use completion. In the case that the reuse policy is used and is configured to unlimited use, the factory IT 615 may process without an additional operation. When the factory IT 615 receives an error as a profile installation result, the factory IT 615 may maintain and store the used key material and change (e.g., error, installation error, and the like) the status of the key material. Further, the factory IT 615 may store the used number without deducting.

The factory IT 615 may reply again the profile installation result to the profile server/server vendor 610. The factory IT/OEM 615 may reply the installation results individually to the profile server/server vendor 610, or collect the results and provide them to the profile server/server vendor 610 in batches at a specific time point. In the case that the processing result is received as eUICC-signed installation result data, the profile server/server vendor 610 may verify the signature of the eUICC to identify the processing result. When a success result is received as the processing result, the profile server/server vendor 610 may complete the use of otPK.EUICC.KA for the corresponding BPP installation, and manage otPK.EUICC.KA by discarding otPK.EUICC.KA received at (step 655) or changing the status of otPK.EUICC.KA to use completion.

The profile server/server vendor 610 or the factory IT/OEM 615 may optionally provide the corresponding installation result(s) to the SP/SP server 605.

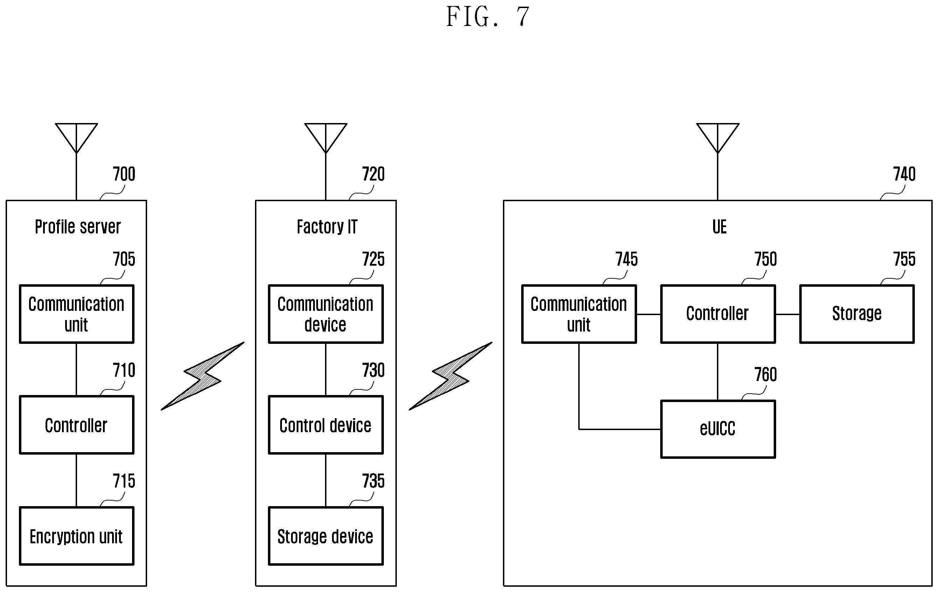

FIG. 7 is a block diagram illustrating a structure of a profile server 700, a factory IT 720, and a UE 740 in a wireless communication system according to an embodiment of the disclosure.

With reference to FIG. 7, the profile server 700 according to an embodiment of the disclosure may include a communication unit 705, a controller 710, and an encryption unit 715.

The communication unit 705 may transmit data to other devices or receive data from other devices. The communication unit 705 may transmit or receive encrypted keys, encrypted profiles, and the like. To this end, the communication unit 705 may be equipped with at least one communication module and an antenna.

The controller 710 may control each component of the profile server 700 to install a profile according to the disclosure. A specific operation of the controller 710 is as described above. According to an embodiment, the profile server 700 may determine whether the order is the same order with reference to information received from a service provider server, a manufacturer's server, or a service provider and a manufacturer, and map the profile and the eUICC provision information for the same order and store them in a storage (not illustrated). Further, the controller 710 may control an operation to prepare in advance by mapping the profile to a specific EID with reference to EID information received from the service provider. According to another embodiment, the controller 710 may determine whether a profile should be prepared for IFPP using information received from a message received through the communication unit 705 to perform the operation by entering the operation of preparing the profile.

According to another embodiment, the controller 710 may determine whether there is an index ID in information received from the message received through the communication unit 705, and in the case that there is an index ID, determine whether to verify the signature of the eUICC by including the index ID, and control to create a signature value of the profile server by including the index ID.

According to another embodiment, the controller 710 may determine whether there is a reuse indicator, for example, a reuse flag, for otPK.EUICC.KA in information received from the message received through the communication unit 705 to determine whether the profile server does not support otPK reuse, and process it through the communication unit 705.

The profile server 700 may receive a message received from the factory IT through the communication unit 705, determine that the request from the corresponding received message is a request for downloading a profile for IFPP, process an operation so as to prepare profiles for the factory, and transmit the corresponding processing result to the factory IT through the communication unit 705. The encryption unit 715 may perform encryption or decryption of a key or profile according to the control of the controller 710.

The encryption unit 715 may include an HSM or be referred to as an HSM itself, and perform encryption and decryption of a profile without exposing an encryption key. According to the implementation, the encryption unit 715 may be built into the controller 710 or implemented in the form of a software code driven by the controller 710.

With reference to FIG. 7, the factory IT 720 according to an embodiment of the disclosure may include a communication device 725, a control device 730, and a storage device 735. The communication device 725 may transmit data to other devices or receive data from other devices. In the case that the factory IT 720 operates as a single device including a storage device 735, the factory IT 720 may have a separate control device 730 and storage device 735 that centrally control the communication device 725 and the storage device 735. The factory IT 720 may be composed of one or more devices, as described above.

The communication device 725 may transmit or receive an encrypted key, an encrypted profile, and the like. To this end, the communication device 725 may be equipped with at least one communication module and an antenna, and the like. According to an embodiment of the disclosure, in the case that the factory IT 720 operates as a single device including a storage device 735, the communication device 725 may be equipped for the factory IT 720 itself. The factory IT 720 may transmit or receive encrypted key information, an encrypted profile, and the like through the communication device 725. Further, the factory IT 720 may transmit or receive including an encrypted index ID. The received profile or encrypted key, and the like may be transmitted to the UE 740 through the communication device 725 by determining mapping with the UE mapped to the corresponding information by the control device 730 of the factory IT 720.

The storage device 735 of the factory IT 720 may store at least one encrypted profile. Further, the storage device 735 may store encrypted key information on at least one encrypted profile. Further, the storage device 735 may further store an index ID mapped to encrypted key information on at least one encrypted profile. The storage device 735 may further store an otPK reuse policy mapped to encrypted key information on one encrypted profile. When the communication device 725 of the factory IT 720 receives a profile installation result, the control device 730 may determine this and update installation result information of the mapped profile, update result information in the storage device 735, and then provide the result information in batches to the profile server 700 at a specific time point. The storage device 735 may include at least one type storage medium of a hard disk type, a random access memory (RAM), a static random access memory (SRAM), a read-only memory (ROM), an electrically erasable programmable read-only memory (EEPROM), a programmable read-only memory (PROM), a magnetic memory, a magnetic disk, or an optical disk. The factory IT 720 may be implemented in the form of a server, and the like.

With reference to FIG. 7, the UE 740 may include a communication unit 745, a controller 750, a storage 755, and an eUICC 760. The communication unit 745 may transmit data to other devices or receive data from other devices. The communication unit 745 may receive an encrypted key, an encrypted profile, and the like. To this end, the communication unit 745 may be equipped with at least one communication module and an antenna, and the like. The controller 750 may control each component of the UE 740 to install a profile according to the disclosure. The controller 750 may control overall operations of the UE 740. For example, the controller 750 may transmit and receive signals through the communication unit 745. Further, the controller 750 may record and read data in the storage 755. There may be at least one controller 750. For example, the controller 750 may include a communication processor (CP) that performs the control for communication and an application processor (AP) that controls upper layers such as an application program. According to an embodiment, in the case that there is configuration information stored in the storage 755 of the UE, the controller 750 may request the corresponding information to the storage 755; thus, a screen display unit (not illustrated) may display or receive the corresponding information and process additional operations. According to another embodiment, the controller 750 may perform a processing process in which the UE infers information that may be referenced for profile installation selection in the factory by matching data records read through the storage 755 or information collected through the controller 750 and the communication unit 745. Further, the controller 750 may determine whether user consent is required for specific information stored in the UE 740 and display it on the screen display unit (not illustrated).

The controller 750 may control the UE 740 to perform a corresponding operation. According to an embodiment, the controller 750 may include an LPA responsible for driving and controlling the eUICC 760, an application integrated and implemented by the LPA, and an application managing factory installation. Further, the controller 750 may include a UE framework that interprets information received by the LPA or the application and that processes a specific command APDU request to the communication processor (CP) or that collects part or all of the requested information from the storage 755 and that replies to the LPA or the application.

The controller 750 may determine an operation to enter an IFPP mode by synthesizing predetermined information acquired from the eUICC 760 through the UE 740 and the communication unit 745, and control the eUICC 760 to enter an IFPP mode. The eUICC 760 may operate according to the control of the controller 750. According to an embodiment of the disclosure, the eUICC 760 may enter the IFPP mode, process a procedure of profile installation, and reply the corresponding processing result to the UE 740. The controller 750 according to an embodiment of the disclosure may receive profile information or a response message of a profile package received from the factory IT 720, determine whether there is profile installation request information for IFPP from the received profile information or response message, determine whether to perform profile installation in a factory mode with reference to UE configuration or user input information upon reception, determine whether to enter the general mode or the IFPP mode, determine to enter the IFPP mode, constitute a message to be transmitted to the eUICC 760 in order to install a profile with IFPP, constitute profile information of a profile package into one or more messages, and control to transmit the corresponding message to the eUICC 760, determine whether to terminate a profile installation procedure by receiving a processing result received by the UE 740 from the eUICC 760, transmit the processing result to the communication unit 745, and control the UE 740 to enable the communication unit 745 to transmit the processing result to the factory IT 720.

The storage 755 may store data such as a basic program, an application program, and configuration information for the operation of the UE 740. In an embodiment of the disclosure, the storage 755 may include at least one storage medium of a flash memory type, a hard disk type, a multimedia card micro type, a memory of a card type (e.g., SD or XD memory), a magnetic memory, a magnetic disk, an optical disk, a random access memory (RAM), a static random access memory (SRAM), a read-only memory (ROM), a programmable read-only memory (PROM), or an electrically erasable programmable read-only memory (EEPROM). The storage 755 may be implemented into an integrated system on a chip (SoC) with the controller 750. The controller 750 may perform various operations using various programs, contents, and data stored in the storage.

In FIG. 7, the eUICC 760 is a UICC chip embedded in the UE 740 and may perform functions of storing, managing, and deleting at least one profile. The profile may collectively refer to one or more applications and subscriber authentication information, and data information such as a phone book stored in an existing UICC card. The eUICC 760 may be included as a part of the UE 740 as illustrated in FIG. 1, and in FIGS. 2 to 6, each was expressed as a separate module in order to describe the operation between the UE 740 and the eUICC 760. The eUICC 760 may include a controller, a storage, and a communication unit for installing a profile. Some of applications in the eUICC 760 may be installed in the controller 750, and the installed applications may include some of functions of the LPA.

According to an embodiment of the disclosure, the controller of the eUICC 760 may acquire profile installation request information of the UE 740 received through the communication unit, and then acquire predetermined information on the profile package and encryption key information through the corresponding message information, determine whether the eUICC 760 will enter IFPP and determine an operation, and accordingly process a profile installation procedure of IFPP and the received information by comparing and verifying it with information in the storage of the eUICC 760, perform an operation for installation by verifying the received profile package, constitute a message, and reply the processing result to the UE 740 through the communication unit. As described in the above embodiments of the disclosure, an example of information processed by comparing and verifying it with the information in the storage of the eUICC 760 may be information such as an index ID, a reuse policy, or otPK.EUICC.KA.

However, the components described in FIG. 7 are not limited to the above-described examples. For example, the factory IT 720 may include more or fewer components than the above-described components. The UE 740 according to various embodiments disclosed in this document may be an electronic device, and the electronic device may be a device of various forms. The electronic device may include, for example, a portable communication device (e.g., smartphone), a computer device, a portable multimedia device, a portable medical device, a camera, a wearable device, or a home appliance device. The electronic device according to an embodiment of this document is not limited to the above-described devices.

It should be understood that various embodiments of this document and terms used therein are not intended to limit the technical features described in this document to specific embodiments, but include various modifications, equivalents, or substitutions of the corresponding embodiments. In connection with the description of the drawings, like reference numerals may be used for similar or related components. The singular form of the noun corresponding to the item may include one or more of the item, unless the relevant context clearly dictates otherwise. In this document, each of phrases such as "A or B", "at least one of A and B", "at least one of A or B", "A, B, or C", "at least one of A, B, and C", and "at least one of A, B, or C" may include any one of or all possible combinations of items listed together in the corresponding one of the phrases. Terms such as "first" or "second" may be simply used for distinguishing a corresponding component from other corresponding components, and do not limit the corresponding components in other aspects (e.g., importance or order). In the case that one (e.g., first) component is referred to as "coupled" or "connected" to another (e.g., second) component, with or without the terms "functionally" or "communicatively", it means that the one component may be connected to the other component directly (e.g., by wire), wirelessly, or through a third component.

The term "module" used in this document may include a unit implemented in hardware, software, or firmware, and be used interchangeably with terms such as, for example, logic, logic block, part, or circuit. The module may be an integrally formed part, or a minimum unit or a portion of the part that performs one or more functions. For example, according to an embodiment, the module may be implemented in the form of an application-specific integrated circuit (ASIC).

Various embodiments of this document may be implemented into software (e.g., program) including one or more instructions stored in a storage medium (e.g., internal memory or external memory) readable by a machine (e.g., electronic device). For example, the processor of the machine (e.g., electronic device) may call and execute at least one command of one or more stored instructions from a storage medium. This makes it possible for the device to be operated to perform at least one function according to the called at least one instruction. The one or more instructions may include a code generated by a compiler or a code executable by an interpreter. The device readable storage medium may be provided in the form of a non-transitory storage medium. Here, 'non-transitory' only means that the storage medium is a tangible device and does not include a signal (e.g., electromagnetic wave), and this term does not distinguish the case that data is semi-permanently stored in the storage medium and the case that data is temporarily stored.

According to an embodiment, a method according to various embodiments disclosed in this document may be included and provided in a computer program product. Computer program products may be traded between sellers and buyers as commodities. The computer program product may be distributed in the form of a device readable storage medium (e.g., compact disc read only memory (CD-ROM)), or may be distributed (e.g., download or upload) via an application store (e.g., Play Store^{™}) or online or directly between two user devices (e.g., smartphones). In the case of online distribution, at least a part of the computer program product may be at least temporarily stored or temporarily generated in a device readable storage medium such as a memory of a server of a manufacturer, a server of an application store, or a relay server.

According to various embodiments, each component (e.g., module or program) of the above-described components may include a singular entity or a plurality of entities. According to various embodiments, one or more components or operations among the above-described corresponding components may be omitted, or one or more other components or operations may be added. Alternatively or additionally, a plurality of components (e.g., module or program) may be integrated into one component. In this case, the integrated component may perform one or more functions of each component of the plurality of components identically or similarly to those performed by the corresponding component among the plurality of components prior to the integration. According to various embodiments, operations performed by a module, program, or other component may be executed sequentially, in parallel, repeatedly, or heuristically, or one or more of the operations may be executed in a different order, or omitted, or one or more other operations may be added.

In the specific embodiments of the disclosure described above, components included in the disclosure are expressed in the singular or plural according to the presented specific embodiments. However, the singular or plural expression is appropriately selected for a situation presented for convenience of description, and the disclosure is not limited to the singular or plural components, and even if a component is represented in the plural, it may be composed of the singular, or even if a component is represented in the singular, it may be composed of the plural.

In the detailed description of the disclosure, although specific embodiments have been described, various modifications are possible without departing from the scope of the disclosure. Therefore, the scope of the disclosure should not be limited to the described embodiments and should be defined by the claims described below as well as by those equivalent to the claims.

## Claims

1. A method performed by a factory in a wireless communication system, the method comprising:
obtaining, from a first server, encryption key information on a plurality of embedded universal integrated circuit cards (eUICCs), wherein the encryption key information includes a one-time public key of an eUICC and an index ID associated with a one-time private key matched to the one-time public key of the eUICC;
storing encryption key information on the plurality of eUICCs;
transmitting, to a profile server, the encryption key information on the plurality of eUICCs;
receiving, from the profile server, a plurality of bound profile packages (BPPs) based on the encryption key information on the plurality of eUICCs; and
transmitting, to a terminal, eUICC encryption key information and BPP matched to the eUICC of the terminal among the plurality of BPPs and the encryption key information on the plurality of eUICCs,
wherein the eUICC of the terminal is configured to verify a signature of the profile server and to decrypt the BPP to install a profile therein based on the BPP and the encryption key information on the eUICC.

2. The method of claim 1, further comprising:
receiving, from the terminal, an installation result of the profile; and
transmitting, to the profile server, the profile installation result.

3. The method of claim 1, further comprising:
transmitting, to a second server, a number of profiles associated with an eUICC identifier (EID) and a list of the eUICC identifiers,
wherein the second server is configured to order, to the profile server, a plurality of profiles based on the number of profiles associated with the EID and the list of EIDs.

4. The method of claim 1, further comprising:
determining to load a profile on some or all of the plurality of eUICCs after storing encryption key information on the plurality of eUICCs,
wherein decryption of the BPP is performed by creating a session key based on the one-time private key of the eUICC and the index ID.

5. A method performed by a terminal in a wireless communication system, the method comprising:
receiving, from a factory, encryption key information on an embedded universal integrated circuit cards (eUICC) and a bound profile package (BPP) matched to an eUICC of the terminal among a plurality of BPPs and the encryption key information on a plurality of eUICCs;
verifying a signature of the profile server based on the BPP and the encryption key information on the eUICC;
decrypting the BPP in the case that verification of the profile server is completed; and
installing a profile by decrypting the BPP,
wherein the plurality of BPPs and the encryption key information on the plurality of eUICCs is transmitted from a first server to the factory,
wherein the encryption key information includes a one-time public key of the eUICC and an index ID associated with a one-time private key matched to the one-time public key of the eUICC, and
wherein a plurality of BPPs are created based on the one-time public key of the eUICC.

6. The method of claim 5, further comprising:
transmitting, to the factory, a profile installation result.

7. The method of claim 5, further comprising:
transmitting a plurality of profile orders from a second server to a profile server based on a number of profiles associated with an eUICC identifier (EID) transmitted from the factory and a list of the EIDs.

8. The method of claim 5, wherein decryption of the BPP is performed by creating a session key based on the one-time private key of the eUICC and the index ID.

9. A factory in a wireless communication system, the factory comprising:
a transceiver capable of transmitting and receiving at least one signal; and
a controller coupled to the transceiver,
wherein the controller is configured to:
obtain, from a first server, encryption key information on a plurality of embedded universal integrated circuit cards (eUICCs), wherein the encryption key information includes a one-time public key of an eUICC and an index ID associated with a one-time private key matched to the one-time public key of the eUICC,
store encryption key information on the plurality of eUICCs,
transmit, to a profile server, the encryption key information on the plurality of eUICCs,
receive, from the profile server, a plurality of bound profile packages (BPPs) based on the encryption key information on the plurality of eUICCs, and
transmit, to a terminal, eUICC encryption key information and BPP matched to the eUICC of the terminal among the plurality of BPPs and the encryption key information on the plurality of eUICCs,
wherein the eUICC of the terminal is configured to verify a signature of the profile server, and to decrypt the BPP to install a profile therein based on the BPP and the encryption key information on the eUICC.

10. The factory of claim 9, wherein the controller is further configured to:
receive, from the terminal, an installation result of the profile, and
transmit, to the profile server, the profile installation result.

11. The factory of claim 9, wherein the controller is further configured to:
transmit, to a second server, a number of profiles associated with an eUICC identifier (EID) and a list of the EIDs, and
the second server is configured to order, to the profile server, a plurality of profiles based on the number of profiles associated with the EID and the list of EIDs.

12. The factory of claim 9, wherein the controller is further configured to:
determine to load a profile on some or all of the plurality of eUICCs after storing encryption key information on the plurality of eUICCs, and
wherein decryption of the BPP is performed by creating a session key based on the one-time private key of the eUICC and the index ID.

13. A terminal in a wireless communication system, the terminal comprising:
a transceiver capable of transmitting and receiving at least one signal; and
a controller coupled to the transceiver,
wherein the controller is configured to:
receive, from a factory, encryption key information on an an embedded universal integrated circuit cards (eUICC) and a bound profile package (BPP) matched to the eUICC of the terminal among BPPs and encryption key information on eUICCs,
verify a signature of the profile server based on the BPP and the encryption key information on the eUICC,
decrypt the BPP in the case that verification of the profile server is completed, and
decrypt the BPP to install the profile,
wherein the plurality of BPPs and encryption key information on the plurality of eUICCs are transmitted from a first server to the factory,
wherein the encryption key information includes a one-time public key of the eUICC and an index ID associated with a one-time private key matched to the one-time public key of the eUICC, and
wherein a plurality of BPPs are created based on the one-time public key of the eUICC.

14. The terminal of claim 13, wherein the controller is further configured to: transmit the profile installation result to the factory.

15. The terminal of claim 13, wherein decryption of the BPP is performed by creating a session key based on the one-time private key of the eUICC and the index ID.
